# EUROPÄISCHE PATENTSCHRIFT

(11) **EP 0 675 143 B1**
(45) Veröffentlichungstag und Bekanntmachung des Hinweises auf die Patenterteilung: **02.01.2002**
(21) Anmeldenummer: 95104297.7
(22) Anmeldetag: 23.03.1995
(51) Int. Cl.: C08G 59/14, C08G 59/10, C08L 63/00, C08G 59/20, C09J 163/00, C09D 163/00

(54) **Amin-modifizierte Epoxidharz-Zusammensetzung**
Amine-modified epoxy resin composition
Composition de résine époxyde modifiée par des amines

(30) Priorität: 28.03.1994 DE 4410785
(43) Veröffentlichungstag der Anmeldung: 04.10.1995
(73) Patentinhaber: Solutia Germany GmbH & Co. KG, 55252 Mainz-Kastel (DE)
(72) Erfinder: Marten, Manfred, D-55126 Mainz (DE); Godau, Claus, D-65399 Kiedrich (DE)
(74) Vertreter: Zounek, Nikolai, Dipl.-Ing.

(56) Entgegenhaltungen:
- EP-A- 0 510 265
- DE-A- 2 361 624
- DE-A- 2 528 021
- FR-A- 2 141 897
- US-A- 3 538 039
- US-A- 4 088 633
- US-A- 4 423 170
- US-A- 4 886 867

## Beschreibung

Epoxidharze, insbesondere solche, die aus Bisphenol A und Epichlorhydrin hergestellt werden, sind bekannte Rohstoffe für die Herstellung von qualitativ hochwertigen Gießharzen, Beschichtungsmassen und Klebstoffen. Die mit Polyaminen gehärteten aromatischen Epoxidharze besitzen neben guter Chemikalien- und Lösungsmittelbeständigkeit eine gute Haftfestigkeit auf vielen Untergründen. Lösungsmittelfrei verarbeitbaren, möglichst niedrigviskosen Bisphenol-A-Epoxidharzen kommt u. a. eine erhebliche Bedeutung für den Schutz und die Sanierung von Betonbauwerken zu. Die Härtung der Epoxidharze kann bei Verwendung von Polyaminen bei Umgebungstemperatur erfolgen. Häufig ist die Anwendbarkeit der Epoxidharz/Polyamin-Systeme jedoch begrenzt durch eine unzureichende Elastizität bzw. Flexibilität im vernetzten Zustand. Für eine dauerhafte Rißüberbrückung werden Beschichtungsstoffe gefordert, die aufgrund ihrer hohen Elastizität über dem Riß "arbeiten" und dabei große Temperaturwechselbelastungen durch eine hohe Dehnbarkeit auffangen können. Darüber hinaus werden auf dem Klebstoffsektor elastische Epoxidharz-Systeme benötigt, die noch bei tiefen Temperaturen (z. B. bis zu -20 °C) eine ausreichende Elastizität aufweisen.

Prinzipiell kann man zwar extern durch Weichmacherzusatz oder intern durch Verringerung der Vernetzungsdichte die Elastizität von Epoxidharz-Systemen erhöhen. Externe Elastifizierungsmittel sind jedoch nicht reaktiv und werden nicht in das Duromer-Netzwerk eingebaut. Als externe Weichmacher können Teer, Phthalsäureester, hochsiedende Alkohole, Ketonharze, Vinylpolymere und andere mit Epoxidharzen und Aminhärtern nicht reagierende Produkte eingesetzt werden. Diese Art der Modifizierung ist allerdings nur auf spezifische Anwendungsgebiete beschränkt, da sie eine Reihe von Nachteilen aufweist. So führen diese Zusätze zu einer starken Störung der Duromerstruktur, sind in ihrem Weichmachungseffekt zu tiefen Temperaturen hin begrenzt, neigen bei Temperaturbeanspruchung und Alterung zum Ausschwitzen und die gehärteten Systeme verspröden. Zur internen Erhöhung der Elastizität werden mit den Epoxidharzen oder Härtern reagierende Verbindungen zugesetzt, die in die Vernetzung mit einbezogen werden. Im einzelnen wird die elastifizierende Wirkung durch Einbau von langkettigen aliphatischen oder stark verzweigten Zusätzen in die Harz- oder Härterkomponente erreicht. Um die Harz-Härter-Systeme problemlos verarbeiten zu können, sollten die Ausgangskomponenten möglichst niedrige Viskositäten aufweisen.

Aus der US 3,538,039 sind heißhärtende Mischungen bekannt aus (1) einem Addukt eines Polyepoxids und Amin, (2) einem polyfunktionellen Anhydrid und (3) einem Beschleuniger für das Anhydrid. Das Addukt ist vorzugsweise aus einem Polyepoxid und aromatischen Aminen, wie Anilin, m-Aminophenol, m-Phenylendiamin, Methylendianilin, aufgebaut.

In der US 3,518,220 werden heißhärtbare Epoxidharz-Mischungen offenbart aus (1) einem Epoxygruppen-enthaltendenAddukteines Polyepoxids mit mehr als 1,0 vic. Epoxygruppen und einem aromatischen Amin mit mindestens zwei aktiven Wasserstoffen an Stickstoff und (2) 3-Aminopyridin. Als Amine werden Methylendianilin, Anilin, m-Aminophenol, m-Phenylendiamin u. a. verwendet.

Die DE-A 38 03 508 beschreibt ein kalthärtendes, warm nachvernetzbares Harz auf Epoxidbasis, erhältlich durch Umsetzung eines bifunktionellen Epoxids der allgemeinen Formel

E - X - E (I)

worin
- E: jeweils einen Rest mit einer Epoxidfunktion bezeichnet und
- X: einen zweiwertigen organischen Rest bedeutet, mit einem sekundären Diamin der allgemeinen Formel 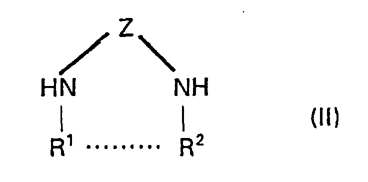
worin
- R¹ und R²: gleich oder verschieden sein können und jeweils Kohlenwasserstoffreste bedeuten, die unter Bildung eines Ringsystems miteinander verbunden sein können, und
- Z: ein zweiwertiger Kohlenwasserstoffrest ist.

Als Epoxidharz wird bevorzugt der Diglycidyläther des Bisphenol A und als Dialkylalkylendiamine z. B. N,N'-Dimethyläthylendiamin und N,N'-Diäthyläthylendiamin eingesetzt. Verwendet wird dieses Epoxidharz als Klebstoff, für Beschichtungen sowie als Matrixmasse.

In der EP-A 0 496 163 wird beschrieben
Ein gehärtetes Epoxidharz enthaltend das Reaktionsprodukt aus:
A. einem Polyepoxid;
B. einem Kettenverlängerungsagens ausgewählt aus Verbindungen gemäß den Formeln 1 und 2;

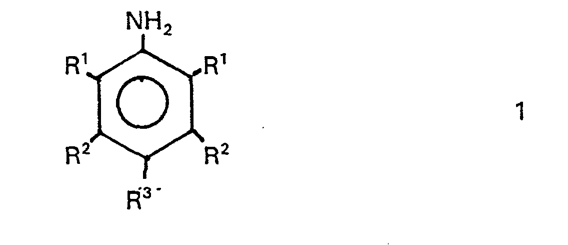

   R⁵ - NH - R⁴ - NH - R⁵ 2
C. gegebenenfalls einem Katalysator für die Reaktion zwischen Polyepoxid und Kettenverlängerungsmittel; und
D. gegebenenfalls einer Dihydroxy-Kohlenwasserstoffverbindung, die auch Halogensubstituenten enthalten kann; wobei

R¹, R² und R³ unabhängig voneinander jeweils Wasserstoff oder einen Substituenten bedeuten, der nicht wesentlich die Reaktion zwischen den primären Aminen und Epoxidgruppen beeinflußt, und der nicht die Reaktion zwischen Epoxygruppen untereinander katalysiert;
R⁴ ist eine C₁₋₂₀ Alkylen-, C₅₋₂₀ Cycloalkylen-, oder C₆₋₂₀ Arylen-Gruppe, wobei diese Gruppen gegebenenfalls mit nicht beeinflussenden weiteren Gruppen substituiert sein können; und
R⁵ ist unabhängig voneinander jeweils eine C₃₋₂₀ sekundäre oder tertiäre Alkyl-, eine C₅₋₂₀ Cycloalkyl- oder C₆₋₂₀ Aryl-Gruppe, wobei diese Gruppen gegebenenfalls mit nicht beeinflussenden weiteren Gruppen substituiert sein können; mit der Einschränkung, daß mindestens eine der Gruppen R¹ oder zwei der Gruppen R² und R³ die Reaktion nicht beeinflussen dürfen.

Diese kettenverlängerten Epoxidfestharze werden u. a. für die Pulverbeschichtung eingesetzt. Sie zeichnen sich durch höhere Erweichungspunkte und höhere Schmelzpunkte bei niedrigerem Epoxidäquivalentgewicht gegenüber den konventionell verlängerten Epoxidharzen aus. Unter "Epoxidäquivalentgewicht" versteht sich die Molmasse der betreffenden Verbindung bezogen auf die Anzahl der Epoxygruppen ("EV-Wert"). Eine Ausführungsform betrifft die wäßrigen Dispersionen von Amin-verlängerten Epoxidharzen, bestehend aus
(i) dem Reaktionsprodukt aus
   A. einem Polyepoxid;
   B. einem Kettenverlängerungsmittel entsprechend einer der Formeln 1, 2 (siehe oben) und 17;

      R¹¹ - NH₂ 17
   C. gegebenenfalls einem Katalysator für die Reaktion zwischen Polyepoxid und Kettenverlängerungsmittel und
   D. gegebenenfalls einer Dihydroxy-Kohlenwasserstoffverbindung, die auch Halogensubstituenten enthalten kann;
(ii) ein Dispergiermittel in ausreichender Menge, um die Zusammmensetzung in Wasser zu dispergieren;
(iii) gegebenenfalls einen Lösungsvermittler; und
(iv) Wasser; wobei
R¹¹ eine lineare oder verzweigte, unsubstituierte oder hydroxysubstituierte C₄₋₂₀ Alkylgruppe ist.

Neben den bereits oben angeführten Aminen 1 und 2 als Komponente B werden für das in Wasser dispergierte Epoxidharz zusätzlich in der Komponente (i) B Verbindungen der Formel (17) R¹¹ -NH₂ eingesetzt. Genauere Angaben über die Art einer eventuellen Verzweigung des Restes R¹¹ sind aus der Patentschrift nicht zu entnehmen. In Beispiel 8 wird n-Hexylamin und in Beispiel 12 n-Octylamin als Kettenverlängerungsmittel eingesetzt.

Bei der wäßrigen Ausführungsform der EP-A 0 496 163 handelt es sich um komplexe Mischungen, in denen Festharze als stabile Dispersionen in Wasser bereitgestellt werden sollen. Als Anwendungen für diese Dispersionen sind u. a. angegeben Beschichtungen für Umgebungstemperaturhärtung, in Papierlatex, in Zementdispersionen und in anderen wasserhaltigen Beschichtungen.

In der US 4,886,867 wird u. a. eine Methode beschrieben zur Herstellung difunktioneller Epoxidharze der Formel 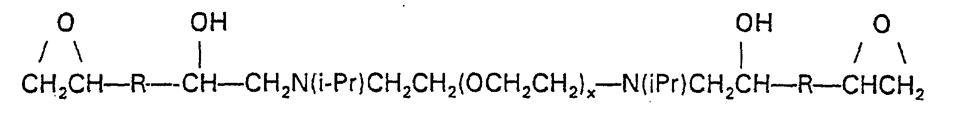 worin R von einem Bisphenol-A-diglycidyläther-Rest stammt und x = 2 bis ca. 10 ist, durch Umsetzung von überschüssigem Epoxidharz mit einem sekundären Isopropylamin-Derivat eines primären Polyoxyalkylendi- oder triamins in Gegenwart von Aceton (iPr = iso-Propylrest).

Die Umsetzung der Aminkomponente mit dem Bisphenol-A-Epoxidharz ist kritisch. Um eine Gelbildung zu verhindern, muß bei der Herstellung des Adduktes ein Lösungsmittel zugesetzt werden. Geeignete Lösungsmittel sind Ketone und Alkohole, besonders bevorzugt ist Aceton. Die difunktionellen Epoxidharze können in Abhängigkeit vom Ausgangsmaterial fest oder flüssig sein und ergeben in gehärtetem Zustand ein transparentes, flexibles, gummiartiges Material. Aus den Beispielen ist zu entnehmen, daß die Diepoxide auf Basis von Bisphenol A-Harz (® Epon 828) halbfeste Produkte und solche auf Basis von ® Eponex 151 (hydriertem ® Epon 828) zwar flüssig sind, aber sehr hohe Viskositäten aufweisen (vgl. Tabelle I S. 9/10).

Nach der US 4,316,003 wird ein Addukt zur Härtung von Epoxidharzen, insbesondere für wäßrige Systeme, erhalten, indem zunächst in einer 1. Stufe überschüssiges Epoxidharz mit einem primären Monoamin abreagiert und danach das erhaltene Epoxid in einer 2. Stufe mit einem Überschuß eines polyfunktionellen Amins zur Reaktion gebracht wird. Die Produkte der 1. Stufe werden in Gegenwart von Lösungsmittel hergestellt und in der 2. Stufe unmittelbar zu dem Aminhärter weiterverarbeitet. Aussagen zur Lagerstabilität und zur eventuellen Verwendung der Stufe 1 werden nicht gemacht.

Aufgabe der vorliegenden Erfindung ist es, reaktive, auf den verschiedensten Substraten gut haftende flexible Beschichtungen und Klebstoffe bereitzustellen, die auch bei tiefen Temperaturen, d. h. von 0 °C und niedriger, z. B. bis -20 °C, noch eine hohe Elastizität aufweisen. Vorteilhaft ist, wenn die Epoxidharze solche Viskositäten aufweisen, die eine leichte Verarbeitung ohne zusätzlichen apparativen Aufwand ermöglichen. Besonders vorteilhaft sind Epoxidharze, die sehr niedrigviskos sind, d. h. die in ihren Viskositätswerten deutlich unter denen flüssiger Bisphenol-A-Epoxidharze liegen.

Es wurde nun überraschenderweise gefunden, daß aus Umsetzungsprodukten (A) von z. B. aliphatischen (Polyoxyalkylen-) Glycidyläthern (A 11) und bestimmten sterisch gehinderten Monoaminen (A 2) niedrigviskose - und für den Fachmann besonders überraschend - lagerstabile Epoxidsysteme erhalten werden, die sich durch Härtung zu hervorragend tieftemperaturelastischen, rißüberbrückenden Beschichtungen und Klebstoffen verarbeiten lassen.

Mit den erfindungsgemäßen festen Epoxiden (A), z. B. erhalten aus Bisphenol A- oder F-Glycidyläthern (A 12) und bestimmten sterisch gehinderten Monoaminen (A 2), lassen sich durch Abmischung mit den erfindungsgemäßen flüssigen Epoxiden (A) Produkte mit beliebigen Zwischenviskositäten einstellen.

In einer Ausführungsform können die erfindungsgemäßen festen Epoxide (A) als Pulverharzkomponente für Beschichtungen und Verklebungen von Substraten verwendet werden.

Die Erfindung betrifft daher Epoxidharz-Zusammensetzungen bestehend aus
(A) Verbindungen, die mindestens zwei 1,2-Epoxidgruppen enthalten, die Umsetzungsprodukte sind aus
(A1) Verbindungen mit mindestens zwei 1,2-Epoxidgruppen ausgewählt aus Glycidyläthern (A12) von mehrwertigen Phenolen sowie Novolaken, und Polyglycidyläthern (A11) von Polyalkoholen, gegebenenfalls in Abmischung mit Monoepoxiden, und
(A2) einem oder mehreren Aminen der Formel I 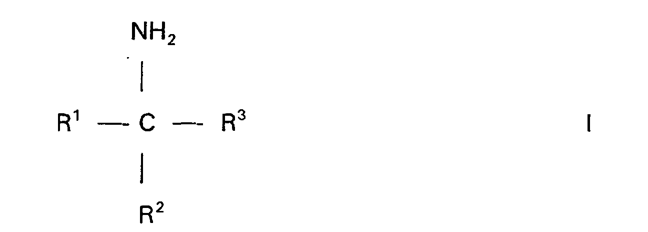 in der bedeuten
   - R¹: verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen,
   - R² und R³: jeweils unabhängig voneinander Wasserstoff oder einen der unter R¹ genannten Reste, wobei für R³ Wasserstoff besonders bevorzugt wird,
   mit der Maßgabe, daß die Aminogruppe nicht direkt an einem Aromaten gebunden ist und für den Fall, daß R² und R³ Wasserstoff sind, der verbleibende Rest R¹ einer der folgenden Substituenten ist 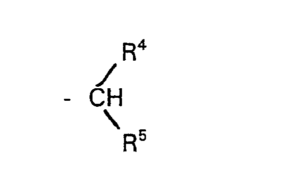 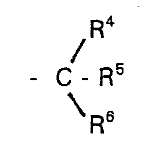 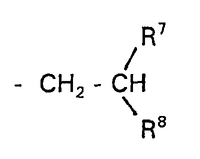 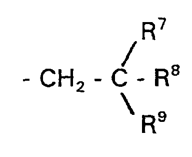 wobei die Reste
   - R⁴ bis R⁹: jeweils unabhängig voneinander die Bedeutung verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen haben, und
   R¹ und R² einen gegebenenfalls substituierten cycloaliphatischen Ring mit bis zu 8 Kohlenstoffatomen bilden können, wobei R³ dann ein Wasserstoffatom bedeutet,
(B) gegebenenfalls 1,2-Epoxidverbindungen, die verschieden von denen gemäß (A1) sind und/oder die nicht umgesetzte Anteile der Verbindungen (A1) aus der Herstellung der Verbindungen (A) sind,
(C) Härtungsmitteln und
(D) gegebenenfalls weiteren Zusätzen.

Als Komponente (A 1) kommen eine Vielzahl der hierfür bekannten Verbindungen in Betracht, die im Mittel mehr als eine Epoxidgruppe, vorzugsweise zwei Epoxidgruppen, pro Molekül enthalten. Es können jedoch auch Mischungen von Polyepoxiden mit Monoepoxiden eingesetzt werden. Diese Epoxidverbindungen (Epoxidharze) können dabei sowohl gesättigt als auch ungesättigt sowie aliphatisch, cycloaliphatisch oder aromatisch sein und auch Hydroxylgruppen aufweisen.
Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche.

Bevorzugt weisen die Verbindungen (A1) Epoxidäquivalentgewichte von 100 bis 500 g/mol auf.

Vorzugsweise handelt es sich dabei um solche Glycidyläther (A 12), die sich von mehrwertigen Phenolen, insbesondere Bisphenolen sowie Novolaken ableiten und deren Epoxidäquivalentgewichte zwischen 100 und 500, insbesondere jedoch zwischen 150 und 250 g/mol, liegen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-äthan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-äther, Bis-(4-hydroxyphenyl)-sulfon u. a. sowie die Chlorierungs- und Bromierungsprodukte der vorstehend genannten Verbindungen, wie beispielsweise Tetrabrombisphenol A. Ganz besonders bevorzugt werden flüssige Diglycidyläther auf Basis von Bisphenol A und Bisphenol F mit einem Epoxidäquivalentgewicht von 180 bis 190 g/mol.

Es können auch Polyglycidyläther (A 11) von Polyalkoholen verwendet werden, wie z. B. Äthandiol-1,2-diglycidyläther, Propandiol-1,2-diglycidyläther, Propandiol-1,3-diglycidyläther, Butandioldiglycidyläther, Pentandioldiglycidyläther(auch Neopentylglykoldiglycidyläther),Hexandioldiglycidyläther,Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpolyoxyäthylen-propylenglykoldiglycidyläther, Polyoxytetramethylenglykoldiglycidyläther, Polyglycidyläther des Glycerins, des 1,2,6-Hexantriols, Trimethylolpropans, Trimethyloläthans, Pentaerythrits, Sorbitols, Polyglycidyläther von oxalkylierten Polyolen (wie z. B. des Glycerins, Trimethylolpropans, Pentaerythrits), Diglydicyläther des Cyclohexandimethanols, Bis-(4-hydroxylcyclohexyl)methans und 2,2-Bis-(4-hydroxycyclohexyl)propans, Polyglycidyläther des Rizinusöls, Triglycidyltris-(2-hydroxy-äthyl)-isocyanurat. Ganz besonders bevorzugt werden Polyoxyalkylenglykoldiglycidyläther, und unter diesen Polyoxypropylenglykoldiglycidyläther mit einem Epoxidäquivalentgewicht von 150 bis 800, insbesondere von 300 bis 400 g/mol, eingesetzt.

In besonderen Fällen können zusätzlich zu den Polyglycidyläthern geringe Mengen reaktiver Verdünner (Monoepoxide) in Mengen bis zu 30 %, vorzugsweise 10 - 20 %, bezogen auf die Masse der Polyglycidyläther mitverwendet werden. Beispiele für geeignete Verbindungen sind Methylglycidyläther, Butylglycidyläther, Allylglycidyläther, Äthylhexylglycidyläther, langkettige aliphatische Glycidyläther, wie Cetylglycidyläther und Stearylglycidyläther, Monoglycidyläther eines höheren isomeren Alkoholgemisches, Glycidyläther einer Mischung von C₁₂- bis C₁₃-Alkoholen, Phenylglycidyläther, Kresylglycidyläther, p-t-Butylphenylglycidyläthers, p-Octylphenylglycidyläther, p-Phenyl-phenylglycidyläther, Glycidyläther eines oxalkylierten Laurylalkohols sowie Monoepoxide wie epoxidierte einfach ungesättigte Kohlenwasserstoffe (Butylen-, Cyclohexen-, Styroloxid) und halogenhaltige Epoxide, wie Epichlorhydrin.

Weiterhin kommen in Frage Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan.

Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Es können auch Mischungen von mehreren Epoxidharzen verwendet werden.

Als Amine (A2) können zur Herstellung der erfindungsgemäßen 1 ,2-Epoxidverbindungen beispielsweise eingesetzt werden t-Butylamin (2-Methyl-2-aminopropan), 2-Methyl-2-butylamin, t-Alkylamine der Rohm und Haas Company wie ® Primene TOA (t-Octylamin = 1,1,3,3-Tetramethylbutylamin), ® Primene 81 R (t-Alkylamine C 12 - C 14), ® Primene JM-T (t-Alkylamine C 16 - C 22), 2-Amino-2-methyl-1-propanol, 2-Amino-2-äthyl-1,3-propandiol, Tris(hydroxymethyl)aminomethan, Isopropylamin (2-Propanamin), sek. Butylamin (2-Aminobutan), 2-Amino-1-butanol, 3-Methyl-2-butylamin, 2-Pentylamin, 3-Pentylamin, Cyclopentylamin, 4-Methyl-2-pentylamin, Cyclohexylamin, 2-Heptylamin, 3-Heptylamin, 2-Methyl-cyclohexylamin, 3-Amino-2,4-dimethylpentan, 6-Methyl-2-aminoheptan, 1-Phenyl-äthylamin, 1-Methyl-3-phenylpropylamin, Cyclododecylamin, besonders bevorzugt sind 2-Aminobutan und Cyclohexylamin.

Weiterhin sind geeignet: Isobutylamin (2-Methyl-1-propanamin), 2-Methylbutylamin (1-Amino-2-methyl-butan), Isoamylamin (Isopentylamin = 1-Amino-3-methyl-butan), Furfurylamin, Benzylamin, 4-Methoxy-benzylamin, 2-Äthylhexylamin, Isononylamin (Gemisch isomerer Nonylamine, das zu ca. 90 % aus 3,5,5-Trimethylhexylamin besteht) u. a., besonders bevorzugt ist 2-Äthylhexylamin.

Bevorzugt werden als Amine (A2) t-Alkylamine mit 9 bis 22, insbesondere 12 bis 14 Kohlenstoffatomen.

Die erfindungsgemäßen Epoxidverbindungen (A) werden in der Weise hergestellt, daß die Epoxide (A1) mit den Aminen (A2) unter Rühren und im allgemeinen unter Erwärmen solange umgesetzt werden, bis das theoretisch berechnete Epoxidäquivalentgewicht erreicht ist, d. h. bis alle aktiven Wasserstoffe des Amins mit den im Überschuß vorhandenen Epoxidgruppen reagiert haben. Die Reaktionstemperaturen werden dabei im allgemeinen bei 25 bis 200 °C, vorzugsweise bei 50 bis 150 °C, insbesondere bei 60 bis 130 °C gehalten. Je nach Temperatur und eingesetzten Epoxiden und Aminen liegen die Reaktionszeiten allgemein zwischen wenigen Minuten und mehreren Stunden.

In den meisten Fällen sind keine zusätzlichen Katalysatoren zur quantitativen Umsetzung der Amine mit den Epoxiden notwendig. Vorteilhaft ist es, insbesondere bei niedrig siedenden Aminen, mit einem Überdruck z. B. bis 5 bar zu arbeiten.

Bei der Herstellung der erfindungsgemäßen Epoxidverbindungen (A) können auch verschiedene Epoxide (A1) als Mischung eingesetzt und direkt mit den Aminen (A2) umgesetzt werden. Es kann aber auch ein gezielter, stufenweiser Aufbau mit verschiedenen Epoxiden nacheinander erfolgen der Art, daß zunächst ein Epoxid I (A1) mit einem Überschuß der Amine, z. B. 2 aktive Aminwasserstoffe pro Epoxidäquivalent, und nach vollständiger Umsetzung der Epoxidgruppen des Epoxids I ein weiteres Epoxid II (A1) im Überschuß mit den noch verfügbaren aktiven Aminwasserstoffen zur Reaktion gebracht wird.

Auf entsprechende Weise können auch verschiedene Amine (A2) sowohl als Mischung als auch in einem stufenweisen Aufbau eingesetzt werden. In den jeweiligen Zwischenstufen mit Aminüberschuß ist es möglich, freies Restamin destillativ ggf. unter Vacuum zu entfernen. Es können auch beliebige Mischungen der erfindungsgemäßen Epoxide hergestellt werden, z. B. um bestimmte Verarbeitungsviskositäten und Eigenschaften der gehärteten Systeme zu erzielen.

Die Epoxidverbindungen (B) sind wie die Verbindungen gemäß (A1) ausgewählt aus der Gruppe der Polyepoxide mit mindestens zwei Epoxidgruppen pro Molekül. Gegebenenfalls können sie auch in Mischung mit Monoepoxiden verwendet werden. Sie sind im allgemeinen verschieden von den als (A1) eingesetzten Verbindungen. Unter die Verbindungen (B) zählen jedoch auch nicht umgesetzte Reste der Epoxidverbindungen (A1) aus der Herstellung der Epoxidharze (A).

Besonders bevorzugt wird eine Zusammensetzung aus (A1) Polyoxypropylengylkoldiglycidyläther, (A2) 2-Aminobutan und (B) Diglycidyläther von Bisphenol A oder Bisphenol F.

Als Komponente (C) können für ein Zweikomponentenverfahren alle bekannten Aminhärtungsmittel für 1,2-Epoxide eingesetzt werden. Beispielhaft seien genannt: aliphatische Amine, wie die Polyalkylenpolyamine, Diäthylentriamin und Triäthylentetramin, Tetraäthylenpentamin, Pentaäthylenhexamin, 2,2,4- und/oder 2,4,4-Trimethylhexamethylendiamin, Bis-(3-aminopropyl)-methylamin, 1,4-Bis(3-aminopropyl)-piperazin, N,N-Bis(3-aminopropyl)-äthylendiamin, 2-Methyl-pentandiamin (® Dytek A), Oxyalkylenpolyamine wie Polyoxypropylendi-und triamine und 1,13-Diamino-4,7,10-trioxatridecan, cycloaliphatische Amine, wie Isophorondiamin (3,5,5-Trimethyl-3-aminomethylcyclohexylamin),4,4'-Diaminodicyclohexylmethan, 3,3'-Dimethyl-4,4'-diamino-dicyclohexylmethan, N-Cyclohexyl-1,3-propandiamin, Diaminocyclohexane, insbesondere 1,2-Diaminocyclohexan, 1,4-Diamino-3,6-diäthylcyclohexan,1,2-Diamino-4-äthylcyclohexan,1-Cyclohexyl-3,4-diaminocyclohexan, 2,2-Bis-(4-aminocyclohexyl)-propan, 1,3- und 1,4-Bis(aminomethyl)-cyclohexan, Piperazin, N-Aminoäthylpiperazin, TCD-Diamin (3(4), 8(9)-Bis(aminomethyl)-tricyclo[5.2.1.0^{2,6}]decan), araliphatische Amine, wie Xylylendiamine (m- und p-Xylylendiamin), aromatische Amine wie Phenylendiamine, 4,4'-Oxydianilin und 4,4'-Diaminodiphenylmethan.

Weiterhin kommen in Betracht Addukthärter, die Umsetzungsprodukte von Epoxidverbindungen, insbesondere Glycidyläther des Bisphenol A und F, mit überschüssigen Aminen sind, beispielsweise Umsetzungsprodukte von Äthylendiamin, 2,2,4-, 2,4,4-Trimethylhexamethylendiamin, Isophorondiamin, 1,2-Diaminocyclohexan, m-Xylylendiamin und/oder Bis(aminomethyl-)cyclohexan mit endständigen Epoxiden, wie z. B. Propylenoxid, Hexenoxid oder mit Glycidyläthern wie Phenylglycidyläther, Äthylhexylglycidyläther, Butylglycidyläther oder mit Glycidylestern, wie ® Cardura E, oder Polyglycidyläthern bzw. -estern, wie sie bei (A1) beschrieben sind. Polyamidoamin- und Polyimidazolinhärter, die für vorliegende Zwecke verwendet werden können, werden durch Kondensation von Polyaminen und Polycarbonsäuren hergestellt, gegebenenfalls unter Zusatz von Monocarbonsäuren, insbesondere durch Kondensation von Polyalkylenpolyaminen mit polymeren Fettsäuren, erhalten durch katalytische Polymerisation von ein- oder mehrfach ungesättigten Fettsäuren oder durch Copolymerisation von polymerisationsfähigen Verbindungen, wie z. B. Styrol.

Als Härter geeignete Mannich-Basen werden durch Kondensation von Polyaminen, vorzugsweise Diäthylentriamin, Triäthylentetramin, Isophorondiamin, 2,2,4- bzw. 2,4,4-Trimethylhexamethylendiamin, 1,3- und 1,4-Bis-(aminomethyl)cyclohexan, insbesondere m- und p-Xylylendiamin mit Aldehyden, vorzugsweise Formaldehyd und ein- oder mehrwertigen Phenolen mit mindestens einer aldehydreaktiven Kernstelle, z. B. die verschiedenen Kresole und Xylenole, p-tert.-Butylphenol, Resorcin, 4,4'-Dihydroxydiphenylmethan, 4,4'-Dihydroxydiphenyl-2,2-propan, vorzugsweise aber Phenol, hergestellt.

Besonders bevorzugt als Härtungsmittel für die Zweikomponentenarbeitsweise sind Härter auf Basis von TCD-Diamin, Mannichbasen z. B. auf Basis von Phenol und/oder Resorcin, Formaldehyd und m-Xylylendiamin sowie N-Aminoäthylpiperazin und Abmischungen von N-Aminoäthylpiperazin mit Nonylphenol und/oder Benzylalkohol.

Häufig ist es erwünscht mit Einkomponentensystemen zu arbeiten, da vom Verarbeiter keine Abmischung von Einzelkomponenten direkt vor dem Gebrauch des Systems, z. B. als Klebstoff, vorgenommen werden muß. Einkomponentensysteme erhält man durch Mischung der Epoxidkomponente (A) und gegebenenfalls (B) mit latenten Härtungsmitteln. Solche Mischungen weisen im allgemeinen eine Lagerstabilität, von mehreren Wochen oder Monaten bei Raumtemperatur auf, d. h. die Viskosität bleibt in diesem Zeitraum konstant oder steigt nur geringfügig. Eines der weit verbreiteten latenten Härtungsmittel ist Dicyandiamid. Dicyandiamid (Cyanoguanidin, ® Dyhard 100 der SKW) ist bei Raumtemperatur selbst kein Härtungsmittel. Es zersetzt sich bei höheren Temperaturen und bewirkt über reaktive Spaltprodukte eine Härtung des Epoxidsystems. Flexible Einkomponenten-Epoxidharzsysteme werden durch Dispergierung des latenten Härters, beispielsweise des Dicyandiamids als Komponente (C) in der flexibilisierten Epoxidharzkomponente (A) gegebenenfalls mit Zusatzstoffen (D), wie beispielsweise eines Thixotropiermittels hergestellt. Weitere geeignete latente Härter sind beispielsweise aromatische Amine, wie z. B. 4,4'- oder 3,3'-Diaminodiphenylsulfon, Guanidine, wie z. B. 1-o-Tolylbiguanid, modifizierte Polyamine wie z. B. ® Anchor 2014 S (Anchor Chemical UK Limited, Manchester), Carbonsäurehydrazide, wie z. B. Adipinsäuredihydrazid, Isophthalsäuredihydrazid oder Anthranilsäurehydrazid, Triazinderivate, wie z. B. 2-Phenyl-4,6-diamino-s-triazin (Benzoguanamin) und Melamin.

Die Härter (C) werden im allgemeinen in Mengen von 0,01 bis 50, vorzugsweise von 1 bis 40 %, bezogen auf die Masse der Komponente (A) eingesetzt. Die Härtung mit Dicyandiamid erfolgt im allgemeinen mit Mengen von 0,01 bis 20, vorzugsweise 0,5 bis 15 %, bezogen auf die Masse der Komponente (A). Gegebenenfalls kann ein Beschleuniger in einer Menge von 0,01 bis 10, vorzugsweise mit 0,1 bis 7 %, bezogen auf die Masse der Komponente (A) (vgl. Zusatzstoffe (D), Beschleuniger) zugesetzt werden).

Bei der Einarbeitung der Härter (C) sowie gegebenenfalls bei der Zugabe der Beschleuniger (vgl. Zusatzstoffe (D) Beschleuniger) muß die Temperatur unterhalb der Reaktionstemperatur des entsprechenden Harz/Härtersystems liegen. Dabei kann es notwendig werden, bei dem Dispergiervorgang das Reaktionsgemisch zu kühlen.

Mit den für das Zweikomponentenverfahren angegebenen Polyaminhärtern ist es prinzipiell möglich, bei Raumtemperatur zu härten. Bei diesen relativ niedrigen Temperaturen werden aber häufig keine optimalen Eigenschaften des gehärteten Systems erzielt. Für das Einkomponentensystem mit latenten Härtern, wie z. B. Dicyandiamid, ist ohnehin eine erhöhte Temperatur zur Initiierung der Vernetzungsreaktion erforderlich. Die Härtungstemperatur der erfindungsgemäßen Zusammensetzung liegt im allgemeinen bei 5 bis 260 °C, vorzugsweise bei 120 bis 200 °C. Die Härtungszeit bei Temperaturen von 120 bis 200 °C liegt im allgemeinen bei 10 bis 200 Minuten.

Für den Fall, daß die erfindungsgemäßen festen Epoxide (A) als Pulverharzkomponente eingesetzt werden, sind als Härtungsmittel (C) besonders Carboxylgruppen enthaltende Polyester geeignet. Die Carboxylpolyester besitzen zumeist eine Säurezahl von 15 bis 150, vorzugsweise 30 bis 100 mg KOH /g und eine Glasübergangstemperatur von mindestens 35 °C, vorzugsweise mindestens 40 bis 60 °C.

Die Molmasse Mₙ (Zahlenmittel; bestimmt durch Gelchromatographie, Polystyrol-Standard) liegt in der Regel zwischen 600 und 12000, vorzugsweise 2000 und 8000 g/mol. Vorzugsweise sind die Carboxylgruppen endständig an den Molekülketten angeordnet, die linear oder verzweigt sein können. Im allgemeinen bestehen die Endgruppen zu über 70 %, vorzugsweise zu über 90 %, aus Carboxylgruppen, wobei die Kettenenden überwiegend durchschnittlich 2 und mehr Carboxylgruppen aufweisen, teilweise als Carbonsäureanhydridgruppen vorliegend.

Die Herstellung der Carboxylgruppen-haltigen Polyester erfolgt bekannterweise in einem Einstufenverfahren oder bevorzugt in einem Zweistufenverfahren wie beispielsweise in der DE-A 21 63 962 beschrieben durch Reaktion von geeigneten Polyolen mit geeigneten Polycarbonsäuren oder deren Derivaten, insbesondere Anhydriden. Die Säurekomponente wird dabei im Überschuß eingesetzt. In der Regel ist das Mengenverhältnis von Polyol- und Säurekomponente so, daß das Äquivalentverhältnis von Hydroxyl- zu Säure- bzw. Anhydridgruppen 1 zu 3 bis 1 zu 1,1, vorzugsweise 1 zu 2,2 bis 1 zu 1,8, beträgt.

Als Hydroxylgruppen enthaltende Verbindungen kommen beispielsweise in Frage: OH-gruppenhaltige Polyester, Polyäther, Polythioäther, Polyacetale, Polycarbonate und Polyesteramide. Die Polyester, die linear oder verzweigt sein können, sind dabei bevorzugt.

Als mehrwertige Alkohole seien genannt z. B. Äthylenglykol, Propylenglykol(1,2) und -(1,3), Butylenglykol-(1,4) und -(2,3), Hexandiol-(1,6), Octandiol(1,8), Neopentylglykol, 1,4-Bishydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole. Auch Polyester aus Lactonen, z. B. -Caprolacton, oder aus Hydroxycarbonsäuren, z. B. ω-Hydroxycapronsäure, sind einsetzbar. Die Polycarbonsäuren können aliphatischer, cycloaliphatischer, aromatischer und/oder heterocyclischer Natur sein und gegebenenfalls, z. B. durch Halogenatome, substituiert und/-oder ungesättigt sein.

Als Beispiel für solche Carbonsäuren und deren Derivate seien genannt: Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure, Terephthalsäuredimethylester und Terephthalsäure-bis-glykolester, insbesondere Trimellithsäureanhydrid (TMSA) sowie Pyromellithsäureanhydrid oder Maleinsäureanhydrid-Addukte. Die Carboxylgruppen-haltigen Polyester als Härter (C) und Epoxidverbindungen (A) liegen in der erfindungsgemäßen Mischung im allgemeinen in solchen Mengen vor, daß das Äquivalentverhältnis von Carboxylgruppen in (C) zu Epoxid- und Hydroxylgruppen in (A) und ggf. (B) 0,7 bis 1,3, vorzugsweise 0,9 bis 1,1, beträgt. Zumeist wird hierfür die Menge an Komponente (C) bei 50 bis 90 %, vorzugsweise bei 65 bis 85 %, bezogen auf die Summe der Massen von (A), (B) und (C) liegen. Auf diese Weise wird in der Regel eine ausreichende Vernetzungsdichte erhalten.

Als Härtungsmittel (C) für Pulverharze kommen ganz allgemein alle zu diesem Zweck bekannten Verbindungen in Frage, insbesondere Anhydrid-Härter wie zum Beispiel: Phthalsäureanhydrid,Tetrahydrophthalsäureanhydrid,4-Methyltetrahydrophthalsäureanhydrid, Hexahydrophthalsäureanhydrid, 4-Methylhexahydrophthalsäureanhydrid, Nadicmethylanhydrid (Trivialname für Isomere des Methylendomethylentetrahydrophthalsäureanhydrids), Chlorendic-(HET)anhydrid (3,4,5,6,7,7-Hexachlor-3,6-endomethylentetrahydropthalsäureanhydrid), Pyromellithsäuredianhydrid, Benzophenontetracarbonsäuredianhydrid, Trimellithsäureanhydrid, Härter entsprechend der Komponente (B) aus DE 2 556 182, Dodecenylbernsteinsäureanhydrid, Isooctenylbernsteinsäureanhydrid u. a., Dicyandiamid, das z. B. unter der Markenbezeichnung ® Dyhard von SKW Trostberg hergestellt wird, phenolische Härtungsmittel wie z. B. die ® Dow-Härter D.E.H. 80, D.E.H. 82, D.E.H. 84, Carbonsäuresalze von Imidazol- oder Imidazolinverbindungen, schmelzbare, lösliche Addukte, die durch Umsetzung einer Epoxidverbindung mit Imidazol- oder Imidazolinverbindungen oder deren Carbonsäuresalze erhalten werden.

Bevorzugt als Härter sind Imidazoline oder Imidazole, insbesondere solche der Formel (III) 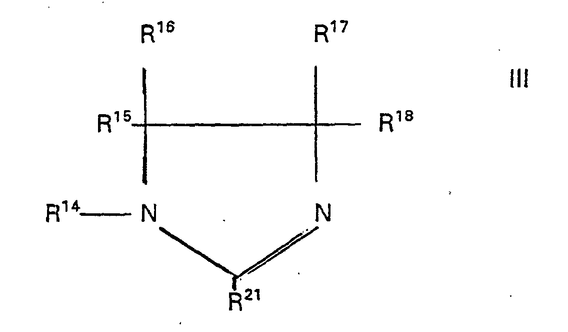 und IV 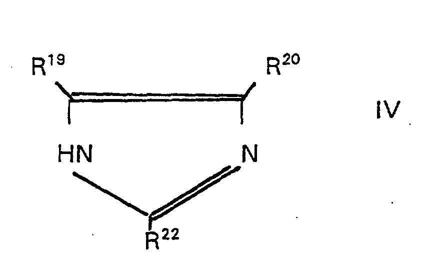 in denen bedeuten R¹⁴ bis R²⁰ unabhängig voneinander Wasserstoff oder ein Alkyl-, Aryl-, Aralkyl-, Cycloalkyl- oder heterocyclischen Rest, R²¹ und R²² gleich R¹⁴ bis R²⁰ oder ein Alkylen- oder Arylen-Rest, der gegebenenfalls mit einem oder mehreren Alkyl-, Aryl-, Aralkyl-, Cycloalkyl- oder heterocyclischen Resten substituiert sein kann und wobei mehrere Reste, gegebenenfalls auch durch Heteroatome verbunden sein können.

Im einzelnen kommen als Imidazoline beispielsweise folgende Verbindungen in Frage: 2-Methyl-imidazolin, 2-Äthyl-4-methyl-imidazolin, 2-Phenylimidazolin, 2-Undecylimidazolin, 2-Heptadecylimidazolin, 2-Äthylimidazolin, 2-lsopropylimidazolin, 2,4-Dimethyl-imidazolin, 2-Phenyl-4-methyl-imidazolin, 2-Benzylimidazolin, 2-(o-Tolyl)-imidazolin, 2-(p-Tolyl)-imidazolin, Tetramethylen-bis-imidazolin,1,1,3-Trimethyl-1,4-tetramethylen-bis-imidazolin,1,3,3-Trimethyl-1,4-tetramethylen-bis-imidazolin, 1,1,3-Trimethyl-1,4-tetramethylen-bis-4-methyl-imidazolin, 1,2-Phenylen-bis-imidazolin, 1,3-Phenylen-bis-imidazolin, 1,4-Phenylen-bis-imidazolin, 1,4-Phenylen-bis-4-methylimidazolin. Es können auch beliebige Mischungen der Imidazoline eingesetzt werden. Besonders bevorzugt ist 2-Phenylimidazolin.

Geeignete Imidazole sind Imidazol selbst, 1-Methyl-imidazol, 2-Methyl-imidazol, 4-Methyl-imidazol, 5-Methyl-imidazol, 1-Äthyl-imidazol, 2-Äthyl-imidazol, 1-Propyl-imidazol, 2-Propyl-imidazol, 2-lsopropyl-imidazol, 1-Butyl-imidazol, 2-Octyl-imidazol, 2-Undecyl-imidazol, 2-Heptadecyl-imidazol, 2-Cyclohexylimidazol, 1-Phenyl-imidazol, 2-Phenylimidazol, 2,4-Dimethyl-imidazol, 1,2-Dimethyl-imidazol, 4,5-Dimethyl-imidazol, 2-Äthyl-4-methyl-imidazol, 1-Äthyl-2-methyl-imidazol, 1-Methyl-2-isopropyl-imidazol, 4-Butyl-5-äthyl-imidazol, 2-Cyclohexyl-4-methyl-imidazol, 1-Benzyl-2-methyl-imidazol, 2-Phenyl-4-methyl-imidazol, 4,5-Diphenyl-imidazol, 2-Äthyl-4-phenyl-imidazol, 2,4,5-Trimethyl-imidazol, 2,4,5-Tricyclohexyl-imidazol, 1,2,4,5-Tetramethylimidazol sowie Benzimidazole und deren Derivate. Es können auch beliebige Mischungen der Imidazole untereinander oder mit Imidazolinen eingesetzt werden.

Die Menge der Härtungsmittel in den erfindungsgemäßen pulverförmigen Mischungen hängt von der Art des Härtungsmittels ab und kann in weiten Grenzen schwanken. Im allgemeinen beträgt die Menge an Härtungsmittel 0,01 bis 60, vorzugsweise 0,5 bis 40 Gew.-%, bezogen auf die Summe der Komponenten (A), (B) und (C).

Die erfindungsgemäße Zusammensetzung kann neben den Komponenten (A), (B) und (C) noch weitere übliche Zusatzstoffe (D) enthalten wie beispielsweise Beschleuniger bzw. Härtungskatalysatoren, weitere Härter und zusätzliche härtbare Harze oder Extenderharze sowie die üblichen Lackadditive wie Pigmente, Pigmentpasten, Farbstoffe, Antioxidantien, Stabilisierungsmittel, Verlauf- bzw. Verdickungsmittel (Thixotropierungsmittel), Entschäumer und/oder Netzmittel, Reaktivverdünner, Füllstoffe, Weichmacher, flammhemmende Stoffe und dgl. Diese Additive können den härtbaren Mischungen gegebenenfalls längere Zeit vorher oder erst unmittelbar vor der Verarbeitung zugegeben werden.

Als Beschleuniger, insbesondere für die Härtung nach dem Zweikomponentenverfahren mit Aminhärtungsmitteln, können beispielsweise Phenole und Alkylphenole mit 1 - 12 C-Atomen in der Alkylgruppe, Kresol, die verschiedenen Xylenole, Nonylphenol, Polyphenole wie Bisphenol A und F, OH-gruppenhaltige aromatische Carbonsäuren wie Salicylsäure, m-Hydroxybenzoesäure, p-Hydroxybenzoesäure sowie tert. Amine, wie Benzyldimethylamin, 1,3,5-Tris(dimethylamino)phenol, Mischungen aus N-Aminoäthylpiperazin und Alkanolaminen (vgl. DE-A 29 41 727), ® Accelerator 399 (Texaco Chemical Company) und dergleichen eingesetzt werden.

Häufig ist es erforderlich, auch die Härtung im Einkomponentenverfahren mit latenten Härtungsmitteln, wie z. B. Dicyandiamid, zu beschleunigen. Als geeignete Beschleuniger sind u. a. zu nennen: Tertiäre Amine, wie z. B. Benzyldimethylamin, 1,4-Diazabicyclo[2.2.2]octan (Dabco), N,N-Dimethyläthanolamin, 2,4-Dimethylpyridin, 4-Dimethylaminopyridin, substituierte Harnstoffe, wie z. B. N,N-Dimethyl-N'-(3-chlor-4-methylphenyl)harnstoff (Chlortoluron), N,N-Dimethyl-N'-(4-chlorphenyl)harnstoff (Monuron) oder N,N-Dimethyl-N'-(3,4-dichlorphenyl)-harnstoff (Diuron), 2,4-Bis(N',N'-dimethylureido)toluol oder 1,4-Bis(N',N'-dimethylureido)benzol, BF₃-Aminkomplexe, quaternäre Ammoniumverbindungen, wie z. B. Benzyltrimethylammoniumchlorid, Tetramethylammoniumchlorid, Tetraäthylammoniumchlorid, Benzyldodecyldiäthylammoniumchlorid, Mercaptane, wie z. B. Triglykoldimercaptan oder 1,2-bis(2'-mercaptoäthoxy)äthan, die unter dem Namen ® Thiokol bekannten polymeren Polysulfide der Formel

HS(CH₂CH₂OCH₂OCH₂CH₂SS)ₙCH₂CH₂OCH₂OCH₂CH₂SH,

Trimethylolpropantrithioglykolat, Dipentaerythrit-hexa(3-mercaptopropionat) oder Trithiole, wie z. B. 2,4,6-s-Triazintrithiol, Polyoxyalkylendithiole oder -trithiole sowie die unter der Bezeichnung ® Cap Cure (Henkel Napco AG) vertriebenen Polyoxyalkylen-Derivate, wie z. B. ® Cap Cure WR 6 oder WR 36 und ®Cap Cure 3-800 und insbesondere Imidazoline und Imidazole.

Im einzelnen kommen als Imidazoline bzw. Imidazole beispielsweise die bei den Härtungsmitteln für Pulverharze erwähnten Verbindungen in Frage.

Als Katalysatoren für eine beschleunigte Reaktion zwischen den Carboxylgruppen einer Härterkomponente (C) und den Epoxidgruppen der Komponenten (A) und (B) kommen beispielsweise in Betracht: Zinknaphthenat und - octoat, Zinnoctoat, Dibutylzinndilaurat, Lithiumbenzoat und -hydroxyd, Zinn- und Zinkchlorid, Titan-, Vanadin- und Zirkonalkoholate, Metallsalze von organischen Carbonsäuren, quaternäre Amonium- und Phosphoniumsalze, Salze der Phosphorsäure, Amine und Amidine, Phosphine, substituierte und nicht substituierte Harnstoffe und Polyharnstoffe, Pyrazolone, Pyrimidine, Imidazol und dessen Derivate. Die Menge an derartigen Katalysatoren liegt zumeist bei 0,05 bis 5, vorzugsweise bei 0,1 bis 2 %, bezogen auf die Masse der Carboxylhärterkomponente (C).

Zusätzlich härtbare Harze im Sinne der Komponente (D) sind zum Beispiel Kohlenwasserstoffharze, Phenoxyharze, Phenolharze, Polyurethanharze, Polysulfide (® Thiokol), reaktive, flüssige Polymere des Butadiens bzw. entsprechende Acrylnitril/Butadien-Copolymere (® Hycar-Typen), während als übliche Extenderharze hier unter anderem nichtreaktive Epoxidharz-Modifizierungsmittel, Pine oil, Teere, Phthalsäureester und Cumaronöle genannt seien.

Als Verlaufmittel können zum Beispiel Acetale, wie Polyvinylformal, Polyvinylacetal, Polyvinylbutyral, Polyvinylacetobutyral u. a. Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente (A) in Mengen von 0,1 - 4 %, vorzugsweise 0,2 - 2,0 %, bezogen auf die Gesamtmasse zugesetzt werden.

Als Haftvermittler und Hydrophobierungsmittel können u. a. Silane eingesetzt werden. Diese können sowohl mit dem anorganischen Untergrund als auch mit dem organischen Polymeren (Klebstoff, Beschichtungsmasse oder dgl.) unter Ausbildung von festen Bindungen reagieren. Durch die Haftverbesserung können die mechanischen Werte, insbesondere nach Feuchtigkeitsbeanspruchung, verbessert werden. Entsprechende Produkte werden z. B. unter der Bezeichnung ® Dynasylan von Hüls Aktiengesellschaft, Marl bzw. als ® Silan von Degussa AG angeboten. Stabilisatoren sind z. B. aromatische Diketone wie Benzoin, die punktuelle Zersetzungen unterbinden und damit die Porenbildung herabdrücken. Diese werden im allgemeinen in Mengen von 0,1 bis 3, vorzugsweise von 0,2 bis 2 %, bezogen auf die Masse des gesamten Bindemittels (Komponenten (A), (B) und (C)), eingesetzt.

Die Farbstoffe und Pigmente können sowohl anorganischer als auch organischer Natur sein. Beispielsweise seien genannt Titandioxid, Zinkoxid, Ruß, Leitfähigkeitsruß wie z. B. ® Printex XE 2 der Degussa AG. Die organischen Farbstoffe und Pigmente sind so auszuwählen, daß sie bei den Härtungstemperaturen stabil sind und zu keinen untolerierbaren Farbtonverschiebungen führen.

Geeignete Füllstoffe sind zum Beispiel Quarzmehl, Silikate, Kreide, Gips, Kaolin, Glimmer, Schwerspat, organische Füllstoffe wie z. B. Polyamidpulver, organische und anorganische Fasern und dergleichen. Als Thixotropier- und Verdickungsmittel können beispielsweise ® Aerosil (hochdisperses Siliciumdioxid z. B. die Typen 150, 200, R 202, R 805 der Degussa), Bentonit-Typen (z. B. ® Sylodex 24 von Grace, ® Bentone, NL Chemicals) verwendet werden.

Zur Herstellung der erfindungsgemäßen härtbaren Mischungen werden die Komponenten (A) und ggf. (B) und (C) sowie gegebenenfalls zusätzlich (D) mit Hilfe geeigneter Aggregate (Rührer, Walzen) gemischt. Bei Komponenten mit niedriger Viskosität kann dies in Substanz erfolgen. Die Einarbeitung der Zusatz- und Füllstoffe erfolgt im allgemeinen mit Zwangsmischern, wie z. B. Dissolvern und Knetern, Doppel-Z-Mischern und Extrudern. Auch hier kann es notwendig sein, durch eine Kühlung des formulierten erfindungsgemäßen Harz/Härter-Systems eine vorzeitige Reaktion der Komponenten zu vermeiden.

Die härtbaren Mischungen der Erfindung können in vielfältiger Weise verwendet werden, z. B. als Bestandteil von Lacken zum Beschichten der verschiedensten organischen und anorganischen Substrate, wie Metalle, Beton, Faserzement, Glas, Keramik, Gummi, Leder, Holz, Textilien, Kunststoffe, ferner zur Herstellung von dickschichtigen Bodenbeschichtungen und Zwischenbeschichtungen. Insbesondere eignen sich die erfindungsgemäßen Mischungen für Überzüge, Klebstoffe, Kitte, Dichtungsmassen und Formteile auf vielerlei Anwendungsgebieten, wo gute Haftung, hohe Schlag- und Stoßfestigkeit und verbesserte Flexibilität und Elastizität gefordert werden, wie z. B. auf dem Bausektor zu rißüberbrückenden Beschichtungen und Fugenausfüllungen sowie als Zusatz zu Kunststoffzementen. Besonders geeignet sind die erfindungsgemäßen Zusammensetzungen als Einkomponenten-Klebstoff sowie für Pulverlacke.

Der Auftrag der Mischungen kann nach den üblichen Methoden erfolgen, wie Streichen, Sprühen, Rakeln, Tauchen, Gießen, Aufwalzen, Ablegen als Kleberaupe aus geeigneten Aggregaten, durch elektrostatisches Pulversprühen, Wirbelsintern, elektrostatisches Wirbelsintern, Flammsprühverfahren und dergleichen. Die Überzüge werden dann üblicherweise bei Raumtemperatur oder gegebenenfalls bei erhöhten Temperaturen gehärtet.

### Beispiele

### Epoxidharze (I)

### Beispiel 1

Zu 2040 g ® Beckopox EP 075 (Polyoxypropylenglykoldiglycidyläther, Hoechst) mit einem Epoxidäquivalent (EV) von 340 g/mol werden in einem Vierhalskolben mit Rührer, Thermometer und Kühler unter Stickstoff 110 g 2-Aminobutan gegeben. Das Reaktionsgemisch wird auf 60 °C erwärmt und zwei Stunden bei dieser Temperatur gehalten, dann wird langsam innerhalb von zwei Stunden auf 120 °C geheizt und vier Stunden gehalten bis das Epoxidäquivalent einen Wert von 737 g/mol erreicht hat. Das Reaktionsprodukt wird sofort auf Raumtemperatur gekühlt. Die Viskosität bei 25 °C beträgt 440 mPa.s und die Aminzahl 42,9 mg KOH/g.

Das Beispiel wurde noch zweimal wiederholt, dabei ergaben sich Harze mit Epoxidäquivalent von 722 g/mol (1') bzw. 688 g/mol (1").

### Beispiel 2

2040 g ® Beckopox EP 075 werden mit 146 g 2-Aminobutan analog Beispiel 1 umgesetzt. Das Reaktionsprodukt hat einen EV von 1111 g/mol, eine Viskosität bei 25 °C von 1200 mPa.s und eine Aminzahl von 54,5 mg KOH/g.

### Beispiel 3

1360 g ® Beckopox EP 075 werden mit 110 g 2-Aminobutan analog Beispiel 1 umgesetzt. Das Reaktionsprodukt hat einen EV von 1396 g/mol, eine Viskosität bei 25 °C von 1860 mPa.s und eine Aminzahl von 59,8 mg KOH/g.

Das Beispiel wurde wiederholt, dabei ergab sich ein Harz mit einem Epoxidäquivalent von 1326 g/mol (3').

### Beispiel 4

Zu 680 g ® Beckopox EP 075 (vergleiche Beispiel 1) werden in einem Vierhalskolben mit Rührer, Thermometer und Kühler unter Stickstoff 54 g Benzylamin gegeben. Das Reaktionsgemisch wird auf 120 °C geheizt und bei dieser Temperatur gehalten. Nach 2,5 Stunden liegt der EV bei 726 g/mol. Der Ansatz wird sofort auf Raumtemperatur abgekühlt. Die Viskosität bei 25 °C beträgt 540 mPa.s und die Aminzahl 40,7 mg KOH/g.

### Beispiel 5

426 g ® Grilonit RV 1812 (Hexandioldiglycidyläther, EMS-Chemie AG) mit einem EV von 142 g/mol werden in einem Vierhalskolben mit Rührer, Thermometer und Kühler vorgelegt, auf 60 °C erwärmt und unter Stickstoff 73 g 2-Aminobutan innerhalb von 35 Minuten zugetropft. Während der Zugabe setzt eine exotherme Reaktion ein, die ab 75 °C mit einem Wasserbad gekühlt wird. Nach Abklingen der Exothermie wird die Temperatur vier Stunden bei 70 °C gehalten. Der EV beträgt jetzt 473 g/mol. Das Reaktionsprodukt wird auf Raumtemperatur abgekühlt und eine Viskosität bei 25 °C von 2980 mPa.s und eine Aminzahl von 102 mg KOH/g gemessen.

### Beispiel 6

a) Zu 340 g ® Beckopox EP 075 (vergleiche Beispiel 1) werden in einem Vierhalskolben mit Rührer, Thermometer und Kühler mit Vorlage 86 g 2-Aminobutan gegeben und langsam innerhalb von zwei Stunden auf 100 °C geheizt. Nach einer Haltezeit von drei Stunden bei dieser Temperatur sind die Epoxidgruppen vollständig umgesetzt. Nun wird Vacuum angelegt und das überschüssige 2-Aminobutan über eine Stunde bei 100 °C und 30 mbar abgezogen. Es werden 403 g Reaktionsprodukt mit einer Aminzahl von 123 mg KOH/g und einer Viskosität bei 25 °C von 930 mPa.s erhalten. Das Wasserstoffaktiväquivalent (Molmasse bezogen auf Anzahl der aktiven Wasserstoffatome) errechnet sich zu 558 g/mol.
b) 389 g des Epoxidaminadduktes aus Beispiel 6a) und 255 g ® Beckopox EP 140 (EV 183 g/mol) werden in einer Apparatur nach Beispiel 1 unter Stickstoff sechs Stunden bei 90 °C umgesetzt. Das Reaktionsprodukt hat ein Epoxidäquivalent von 911 g/mol, eine Aminzahl von 73,4 mg KOH/g und die Viskosität bei 25 °C beträgt 1895 mPa.s, gemessen in einer 80%igen Lösung in Methoxypropanol.

### Beispiel 7

a) 453 g ® Beckopox EP 075 (vergleiche Beispiel 1) und 73 g 2-Aminobutan werden in einem Vierhalskolben mit Rührer, Thermometer und Kühler mit Vorlage eine Stunde bei 60 °C gehalten und dann innerhalb von zwei Stunden auf 100 °C erwärmt. Nach einer Haltezeit von 2,5 Stunden bei 100 bis 120 °C wird 20 Minuten Vacuum von 34 mbar angelegt und auf Raumtemperatur abgekühlt. Es werden 520 g Reaktionsprodukt mit einer Aminzahl von 103 mg KOH/g und einer Viskosität bei 25 °C von 2250 mPa.s erhalten. Das Wasserstoffaktiväquivalent errechnet sich zu 1040 g/mol.
b) 502 g des Epoxidaminadduktes aus Beispiel 7a) und 225 g ®Beckopox EP 140 (EV 183) werden in einer Apparatur nach Beispiel 1 unter Stickstoff sechs Stunden bei 90 °C umgesetzt. Das Reaktionsprodukt hat ein Epoxidäquivalent von 982 g/mol, eine Aminzahl von 71 mg KOH/g und die Viskosität bei 25 °C beträgt 1177 mPa.s (80%ig in Methoxypropanol).

### Beispiel 11

Zu 1360 g ® Beckopox EP 075 (vergleiche Beispiel 1) mit einem Epoxidäquivalent von 340 werden in einem Vierhalskolben mit Rührer, Thermometer und Kühler unter Stickstoff 194 g ® Primene 81 R (t-Alkylamine mit resten im bereich C12 bis C14 der Rohm & Haas Company; Molmasse 194) gegeben. Das Reaktionsgemisch wird auf 150 °C erwärmt und insgesamt 14 Stunden bei dieser Temperatur gehalten bis das Epoxidäquivalent einen Wert von 651 erreicht hat. Die Viskosität bei 25 °C beträgt 249 mPa.s und die Aminzahl 40,8 mg KOH/g.

### Beurteilung der Lagerstabilität (III)

In der Tabelle 1 sind die Epoxidäquivalente (EV-Werte), bestimmt nach DIN 53 188, und Viskositäten, bestimmt nach DIN 53 177, nach 6 bzw. 12 Wochen Lagerzeit bei 50 °C angegeben. Mit einer Ausnahme liegt der Anstieg der Meßwerte nach 12 Wochen gegenüber dem Herstellungswert bei den Epoxidäquivalenten unter 10 % und bei den Viskositäten unter 25 %, meistens aber deutlich unter 20 %.

Allgemein ist bekannt, daß tertiäre Amine die Eigenpolymerisation der Epoxidgruppen katalysieren und so das Epoxidharz vernetzen. Es ist deshalb überraschend, daß die erfindungsgemäßen Epoxide selbst bei 50 °C nicht gelieren und nur einen begrenzten Anstieg der Kenndaten zeigen.

Somit kann man problemlos Harze, z. B. drei Monate, bei Raumtemperatur und gelegentlich bei höheren Temperaturen, z. B. 40 °C, bis zum Verbrauch lagern. Dies wird durch die Untersuchungsergebnisse der Tabelle 2 bestätigt. Innerhalb von drei Monaten bleiben die EV-Werte nahezu konstant und die Viskosität steigt um einen Betrag, der etwa dem Fehler der Meßmethode entspricht.

### Elastische Beschichtungen (II)

100 g der erfindungsgemäßen aminomodifizierten Epoxidharze bzw. Epoxidharzmischungen werden mit der etwa äquivalenten (dem HAV entsprechenden) Menge Härter verrührt und davon mit Hilfe eines Aufziehrahmens nach Erichsen eine 1,5 mm dicke Schicht auf eine Polypropylenplatte aufgezogen, (a) 7 Tage bei Raumtemperatur gehärtet, (b) 5 Stunden bei 60 °C nachgetempert und (c) vom Polypropylen entnommen und 24 Stunden bei -20 °C gelagert. Zur Beurteilung der Tieftemperaturelastizität wird die -20 °C kalte Probe in der Mitte um 180° gebogen.

Die einzelnen Beispiele und die Prüfergebnisse sind in Tabelle 3 zusammengestellt.

### Mechanische Werte der Formkörper aus verschiedenen Harz/Härter-Kombinationen

Die erfindungsgemäßen aminomodifizierten Epoxidharze bzw. Epoxidharzmischungen und die Vergleichsepoxidharze werden in den in Tabelle 4 angegebenen Gewichstverhältnissen verrührt und in Verpressungsformen aus Stahl gegossen. Die Härtung erfolgt über 7 Tage bei Raumtemperatur. Die auf diese Weise gewonnenen Platten von 4 mm Schichtdicke werden 5 Stunden bei 60 °C nachgetempert.

Die für mechanische Prüfversuche erforderlichen Probekörper werden je nach Härte durch Stanzen oder durch spanende Bearbeitung aus den Platten entnommen und anschließend bis zum Versuchsbeginn 48 Stunden bei Normalklima 23/50-2 nach DIN 50 014 gelagert.

Es wurden Zugversuche nach DIN 53455 bei Normalklima 23/50-2 DIN 50 014, bei 0 °C und bei -20 °C durchgeführt. Es kamen jeweils 6 Probekörper Nr. 3 nach DIN 53 455 zur Verwendung. Die Probekörper für die Versuchsdurchführung bei 0 °C und bei -20 °C wurden 4 Stunden vor Versuchsbeginn bei dieser Temperatur gelagert. Die Prüfgeschwindigkeit betrug 1 bzw. 50 mm/min bei 0 °C und bei -20 °C und 5 mm/min bei 23 °C.

Die Dehnungen wurden mittels eine induktiven Meßsystems erfaßt. Ermittelt wurden die Zugfestigkeit σ_{B} und die Reißdehnung ε_{R}. Ermittelt wurde das Elastizitätsmodul Eₒ zwischen 0,05 und 0,25 % Dehnung.

Die Meßergebnisse (arithmetischer Mittelwert) sind in Tabelle 4 angegeben.

Mit den erfindungsgemäßen Harz/Härter-Systemen ist es möglich, je nach Zusammensetzung und gewünschtem Anwendungszweck zähelastische bis weichelastische Beschichtungen zu erhalten. Insbesondere lassen sich hervorragend tieftemperaturelastische Massen herstellen.

Die hervorragende Elastizität der gehärteten Systeme läßt sich auch durch die gefundenen hohen Reißdehnungswerte bei Temperaturen von 23 bis -20 °C (Tabelle 4) belegen.

Ein weiterer Vorteil sind die niedrigen Viskositäten der elastischen Epoxidharze A im Vergleich zu den bekannten Harzen nach dem Stand der Technik (vergleiche Tabelle 1 und 2).

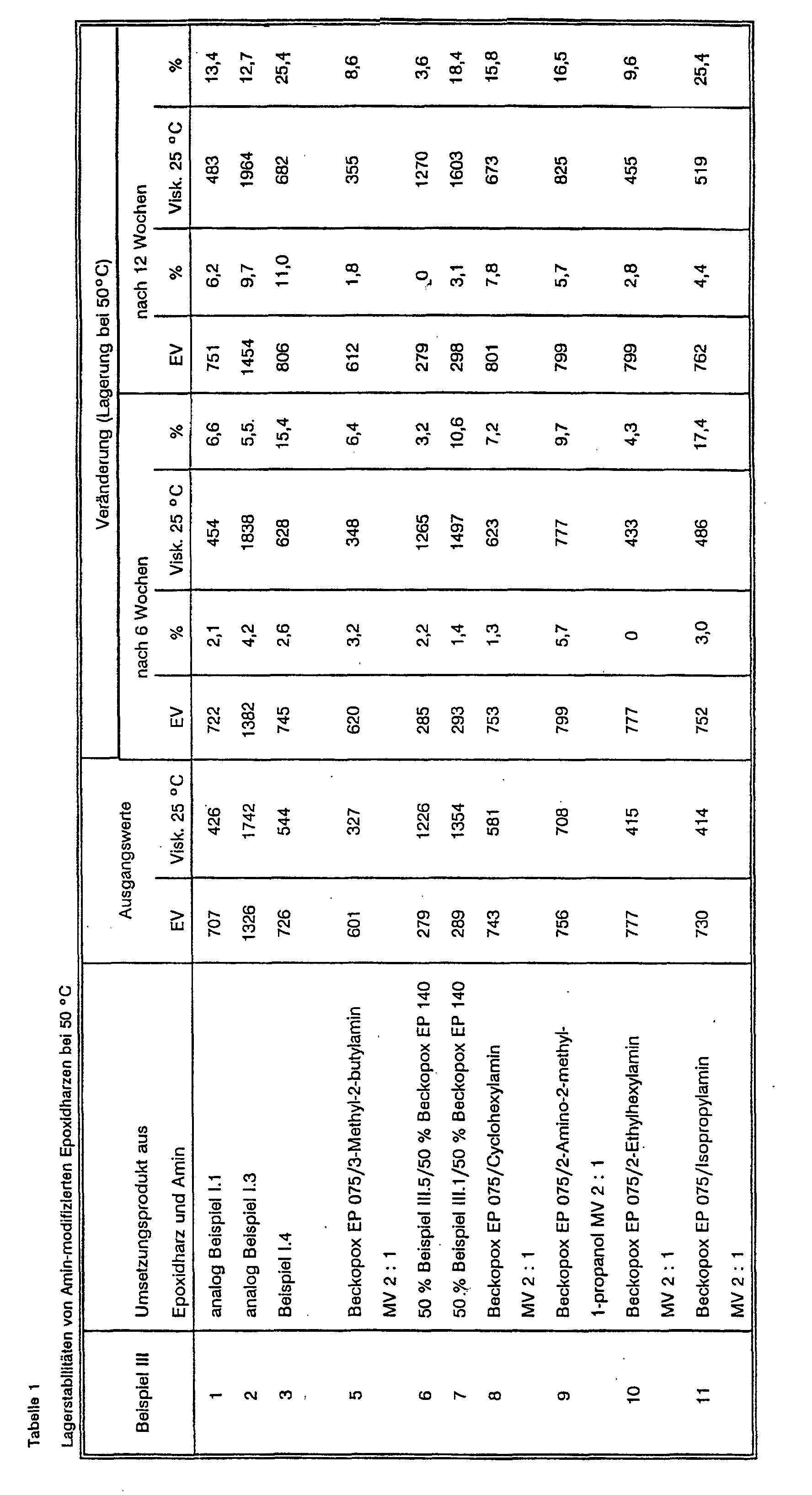

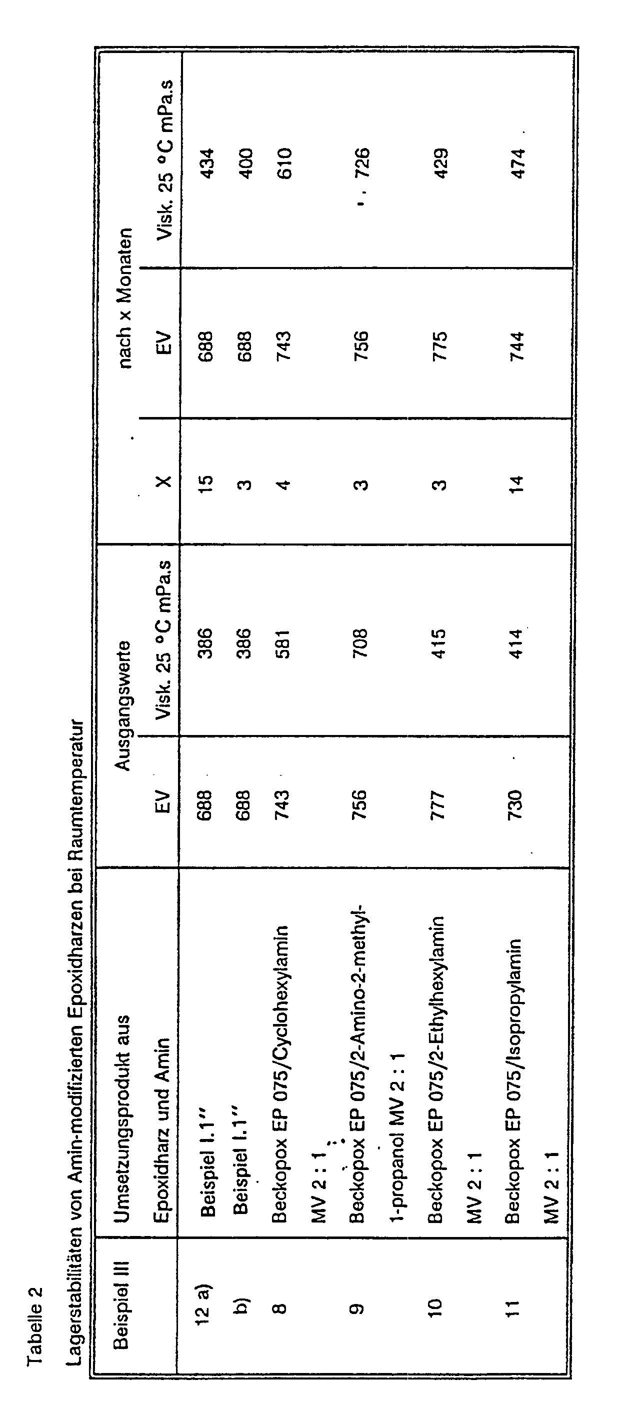

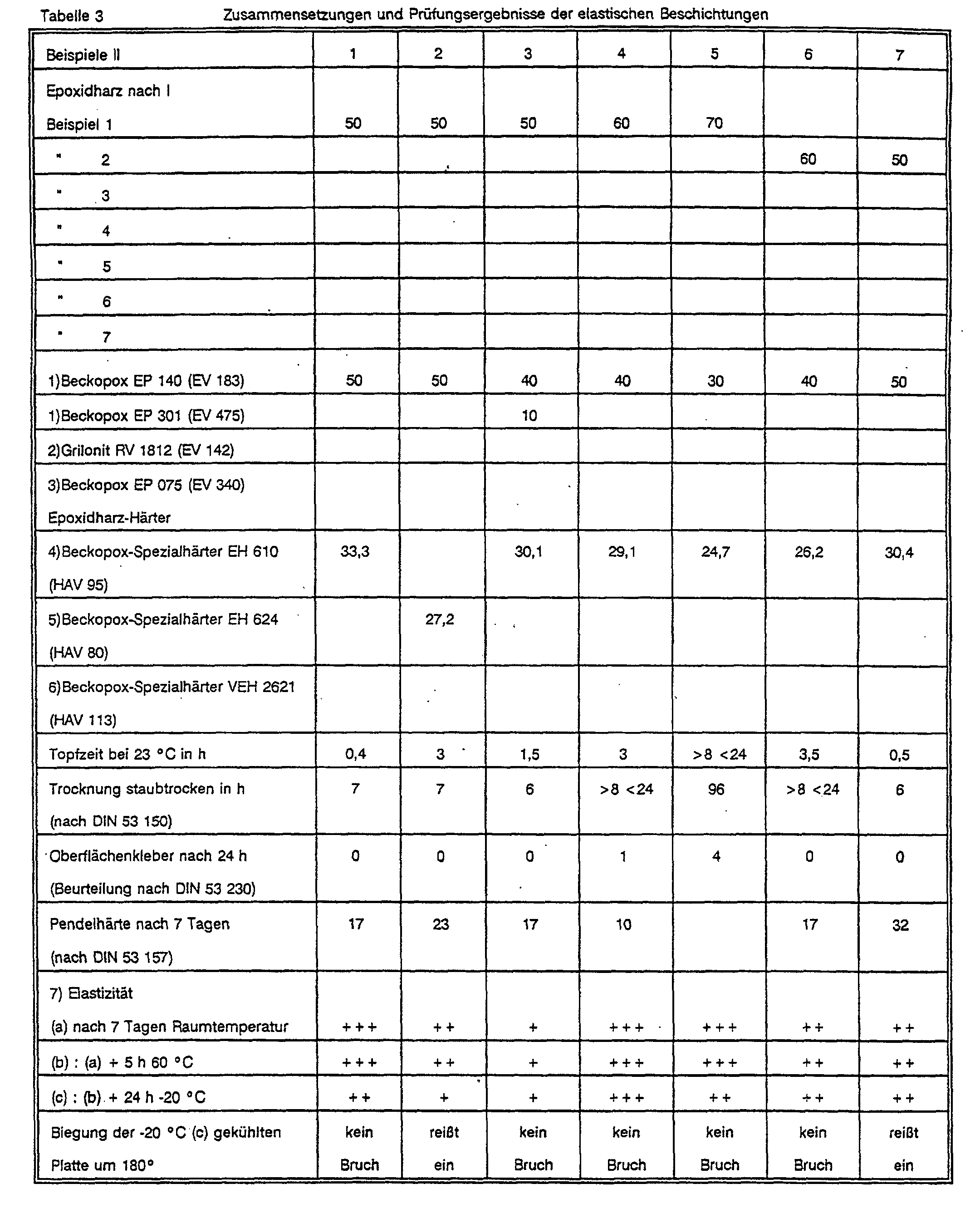

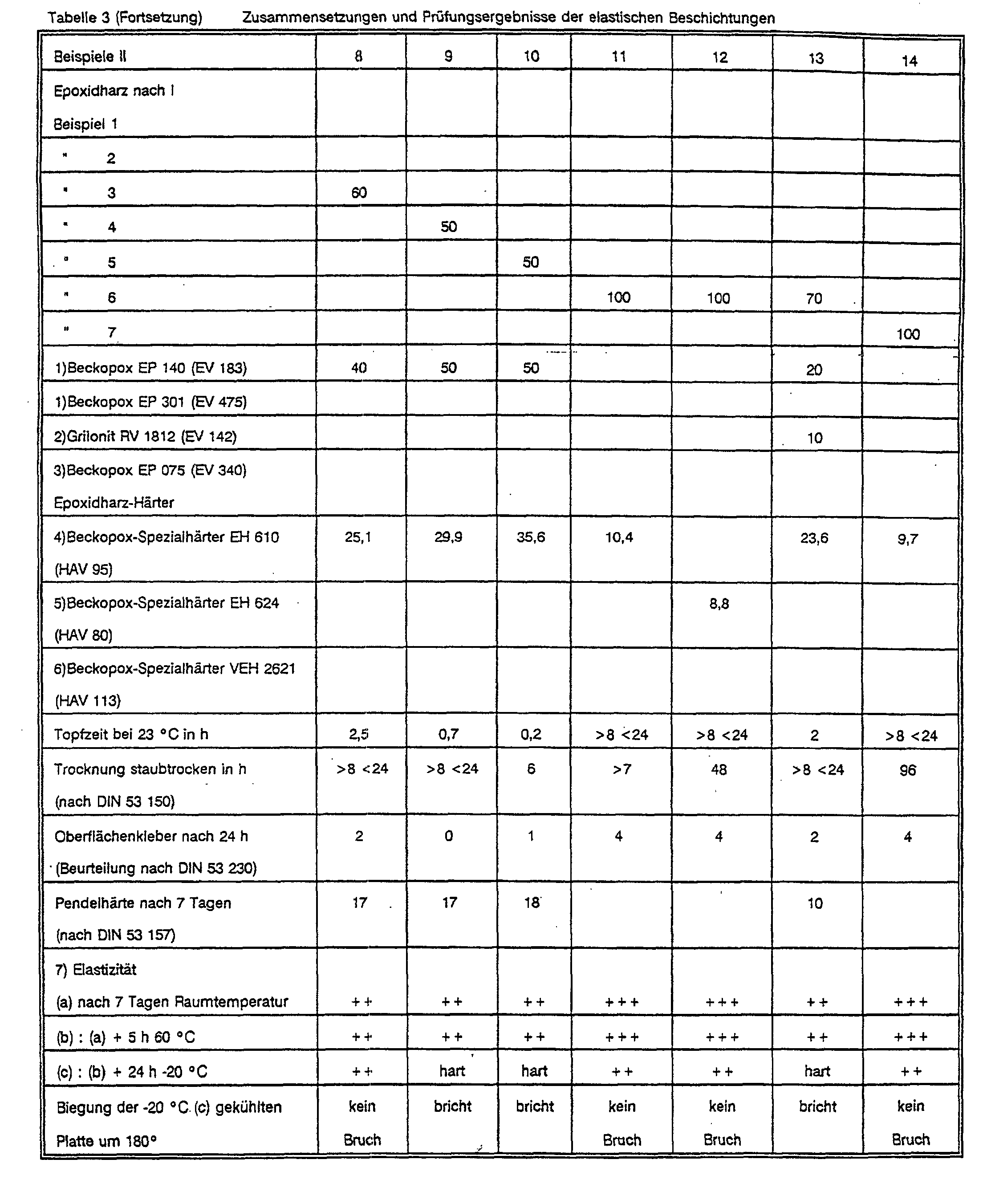

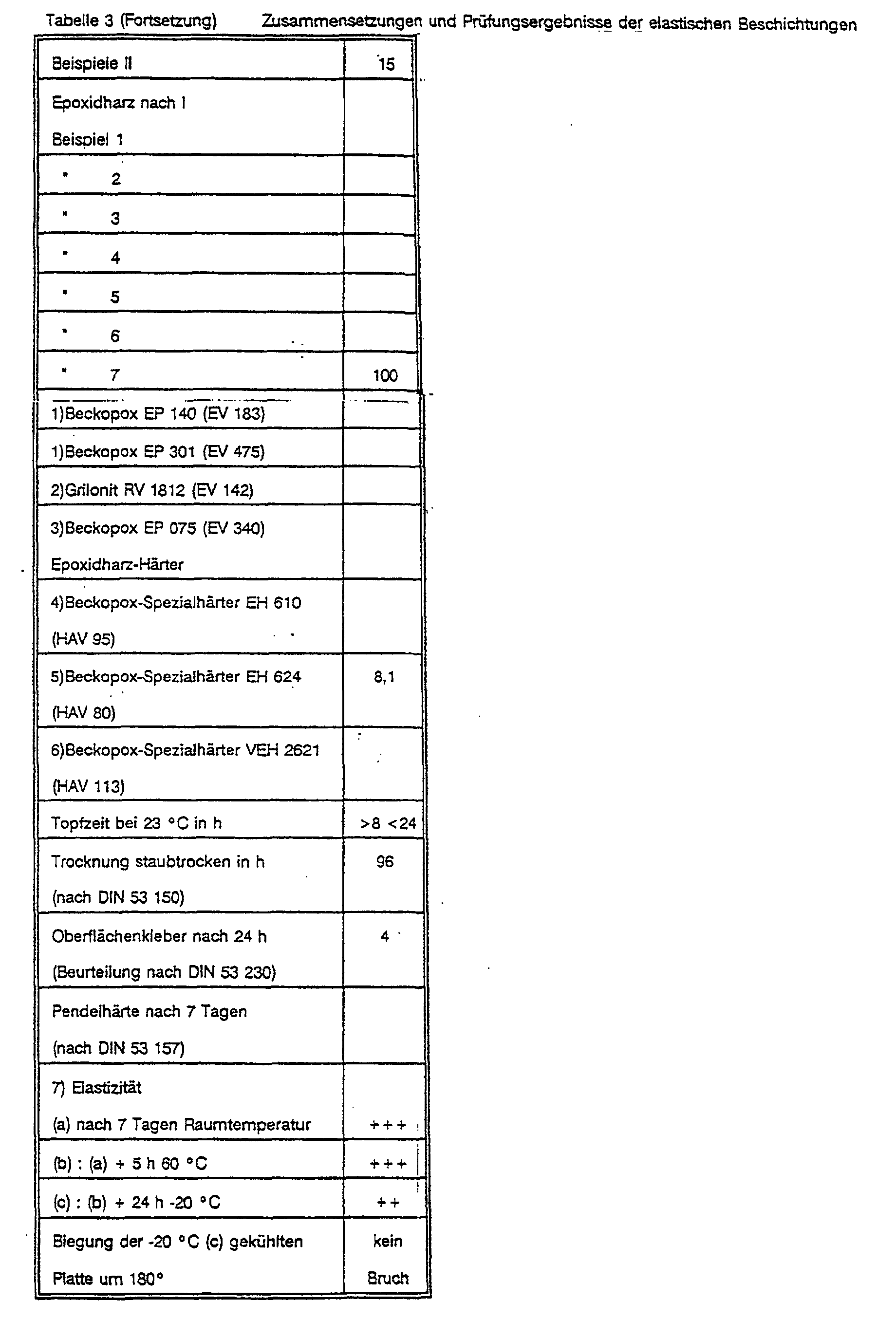

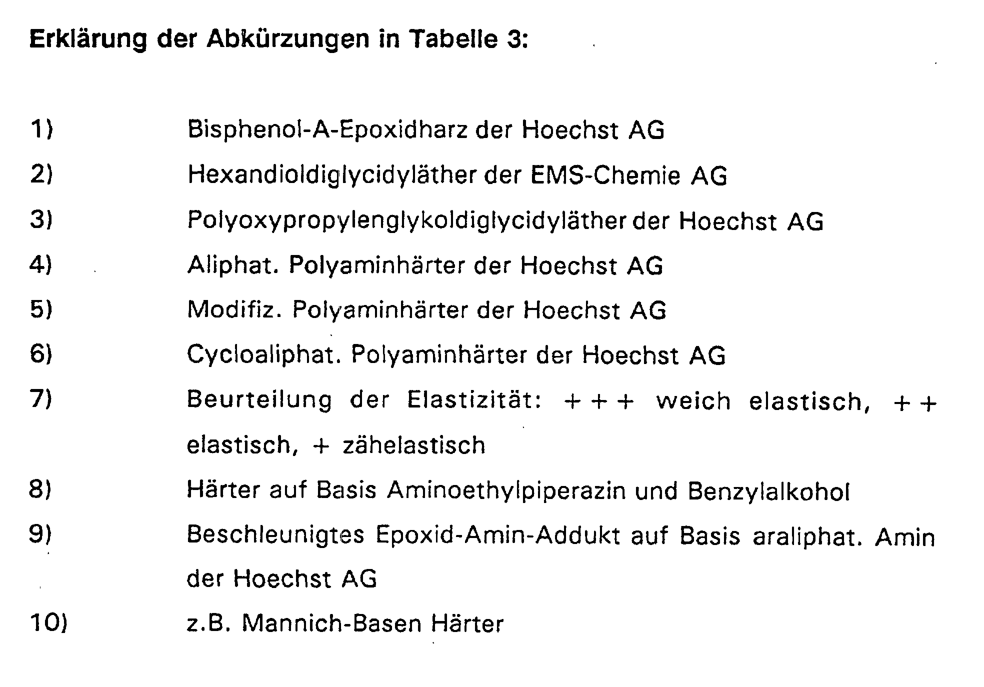

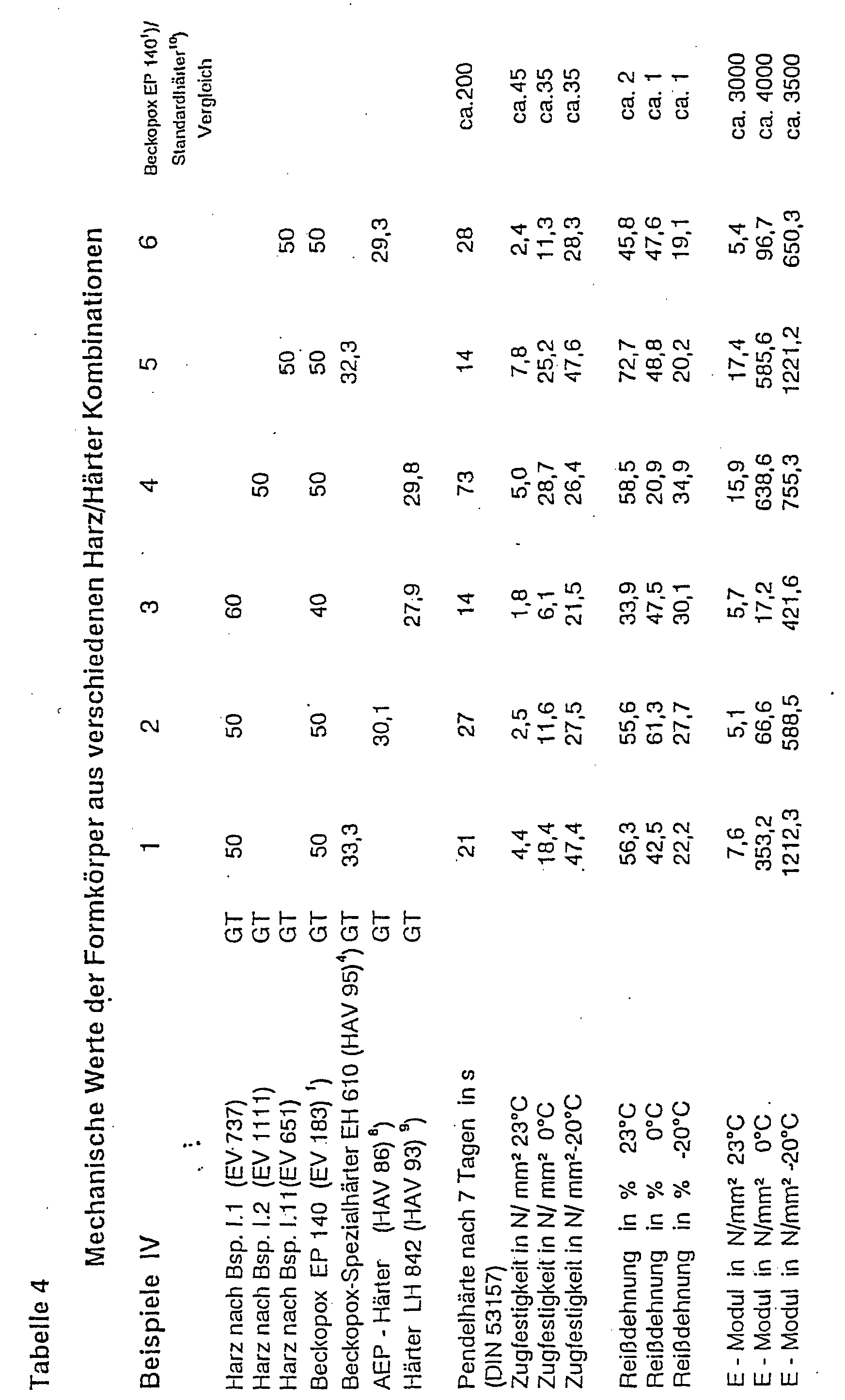

## Patentansprüche

1. Epoxidharz-Zusammensetzungen bestehend aus
(A) Verbindungen, die mindestens zwei 1,2-Epoxidgruppen enthalten, die Umsetzungsprodukte sind aus
(A1) Verbindungen mit mindestens zwei 1,2-Epoxidgruppen, ausgewählt aus Glycidyläthern (A12) von mehrwertigen Phenolen sowie Novolaken, und Polyglycidyläthern (A11) von Polyalkoholen, gegebenenfalls in Abmischung mit Monoepoxiden, und
(A2) einem oder mehreren Aminen der Formel I 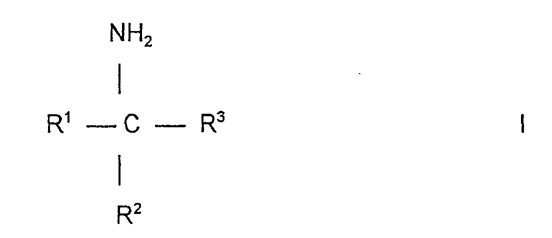
in der bedeuten
R¹ verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen,
R² und R³ jeweils unabhängig voneinander Wasserstoff oder einen der unter R¹ genannten Reste
mit der Maßgabe, daß die Aminogruppe nicht direkt an einem Aromaten gebunden ist und für den Fall, daß R² und R³ Wasserstoff sind, der verbleibende Rest R¹ einer der folgenden Substituenten ist 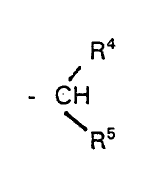 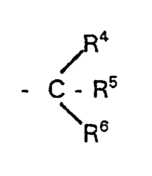 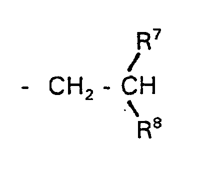 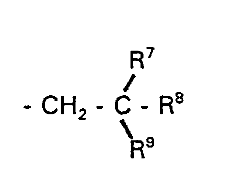
wobei die Reste
R⁴ bis R⁹ jeweils unabhängig voneinander die Bedeutung verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen haben, und
R¹ und R² einen gegebenenfalls substituierten cycloaliphatischen Ring mit bis zu 8 Kohlenstoffatomen bilden können, wobei R³ dann ein Wasserstoffatom bedeutet, und
(B) gegebenenfalls 1,2-Epoxidverbindungen, die verschieden von denen gemäß (A1) sind und/oder die nicht umgesetzte Anteile der Verbindungen (A1) aus der Herstellung der Verbindungen (A) sind,
(C) Härtungsmitteln und
(D) gegebenenfalls weiteren Zusätzen.

2. Zusammensetzung nach Anspruch 1, **dadurch gekennzeichnet, daß** die Verbindungen (A1) Epoxidäquivalentgewichte von 100 bis 500 g/mol aufweisen.

3. Zusammensetzung nach Anspruch 2, **dadurch gekennzeichnet, daß** die Verbindungen (A1) ausgewählt sind aus der Gruppe (A12) der Diglycidyläther von Bisphenol-A und Bisphenol-F.

4. Zusammensetzung nach Anspruch 1, **dadurch gekennzeichnet, daß** die Verbindungen (A1) ausgewählt sind aus der Gruppe (A11) der Polyoxyalkylenglykoldiglycidyläther sind.

5. Zusammensetzung nach Anspruch 4, **dadurch gekennzeichnet, daß** die Verbindungen (A1) Polyoxypropylenglykoldiglycidyläther sind.

6. Zusammensetzung nach Anspruch 1, **dadurch gekennzeichnet, daß** die Amine (A2) t-Alkylamine mit 4 bis 22 Kohlenstoffatomen sind.

7. Zusammensetzung nach Anspruch 1, **dadurch gekennzeichnet, daß** die Amine (A2) t-Alkylamine mit 12 bis 14 Kohlenstoffatomen sind.

8. Zusammensetzung nach Anspruch 1, **dadurch gekennzeichnet, daß** die Amine (A2) die Formel 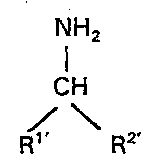 aufweisen,
in der R^{1'} und R^{2'} die Bedeutung von R¹ in Anspruch 1 haben oder R^{1'} und R^{2'} einen gegebenenfalls substituierten cycloaliphatischen Ring mit bis zu 8 Kohlenstoffatomen bilden können.

9. Zusammensetzung nach Anspruch 8, **dadurch gekennzeichnet, daß** als Amin (A2) 2-Aminobutan eingesetzt wird.

10. Zusammensetzung nach Anspruch 8, **dadurch gekennzeichnet, daß** als Amin (A2) Cyclohexylamin eingesetzt wird.

11. Zusammensetzung nach Anspruch 8, **dadurch gekennzeichnet, daß** als Amin (A2) 2-Äthylhexylamin eingesetzt wird.

12. Zusammensetzung nach Anspruch 1, **dadurch gekennzeichnet, daß** die Verbindungen (A) Umsetzungsprodukte aus Polyoxypropylenglykoldiglycidyläthern (A1) und 2-Aminobutan (A2) und die Verbindungen (B) ausgewählt sind aus der Gruppe der Diglycidyläther von Bisphenol-A und Bisphenol-F.

13. Zusammensetzung nach Anspruch 1, **dadurch gekennzeichnet, daß** als Härtungsmittel (C) Aminoäthylpiperazin eingesetzt wird.

14. Zusammensetzung nach Anspruch 1, **dadurch gekennzeichnet, daß** als Härtungsmittel eine Mischung aus Aminoäthylpiperazin und Nonylphenol und/oder Benzylalkohol verwendet wird.

15. Zusammensetzung nach Anspruch 1, **dadurch gekennzeichnet, daß** die Härtungsmittel (C) latente Härtungsmittel sind.

16. Zusammensetzung nach Anspruch 15, **dadurch gekennzeichnet, daß** als Härtungsmittel (C) Dicyandiamid eingesetzt wird.

17. Zusammensetzung nach Anspruch 1, **dadurch gekennzeichnet, daß** die Härtungsmittel (C) Carboxylgruppen-enthaltende Polyester sind.

18. Zusammensetzung nach Anspruch 17, **dadurch gekennzeichnet, daß** die Carboxylgruppen-enthaltende Polyester (C) eine Säurezahl von 15 bis 150 mg KOH/g und eine zahlenmittlere Molmasse Mₙ von 600 bis 12000 g/mol aufweisen.

19. Zusammensetzung nach Anspruch 1, **dadurch gekennzeichnet, daß** die Härtungsmittel (C) Verbindungen der Formel III oder IV sind 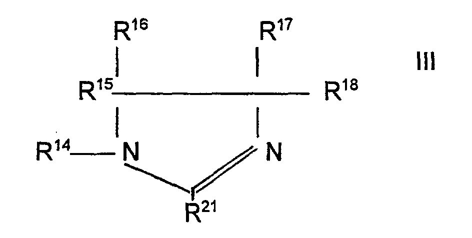 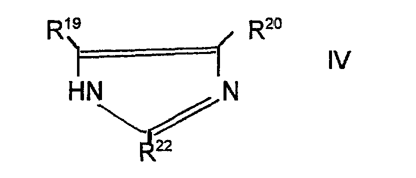 in denen bedeuten R¹⁴ bis R²⁰ unabhängig voneinander Wasserstoff oder ein Alkyl-, Aryl-, Aralkyl-, Cycloalkyl- oder heterocyclischen Rest, R²¹ und R²² gleich R¹⁴ bis R²⁰ oder ein Alkylen- oder Arylen-Rest, der gegebenenfalls mit einem oder mehreren Alkyl-, Aryl-, Aralkyl-, Cycloalkyl- oder heterocyclischen Resten substituiert sein kann und wobei mehrere Reste, gegebenenfalls auch durch Heteroatome verbunden sein können.

20. Zusammensetzung nach Anspruch 19, **dadurch gekennzeichnet, daß** als Härtungsmittel (C) 2-Phenylimidazolin eingesetzt wird.

21. Verwendung der Zusammensetzung nach Anspruch 1 als rißüberbrückende Beschichtung.

22. Verwendung der Zusammensetzung nach Anspruch 1 als Klebstoff, insbesondere als Einkomponenten-Klebstoff.

23. Verwendung der Zusammensetzung nach Anspruch 1 zur Pulverlackbeschichtung.

## Claims

1. An epoxy resin composition comprising
(A) compounds which contain at least two 1,2-epoxide groups and which are reaction products of
(A1) compounds containing at least two 1,2-epoxide groups and selected from among glycidyl ethers (A12) of polyhydric phenols and novolaks and polyglycidyl ethers (A11) of polyalcohols, if desired in admixture with monoepoxides, and
(A2) one or more amines of the formula I 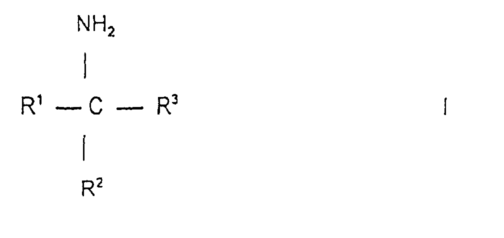
where
R¹ is a branched or unbranched aliphatic, cycloaliphatic, araliphatic or aromatic hydrocarbon radical having from 1 to 30 carbon atoms, which is unsubstituted or substituted by hydroxy, alkoxy or halogen groups,
R² and R³ are each, independently of one another, hydrogen or one of the radicals specified under R¹,
with the proviso that the amino group is not directly bonded to an aromatic and, in the case of R² and R³ being hydrogen, the remaining radical R¹ is one of the following substituents 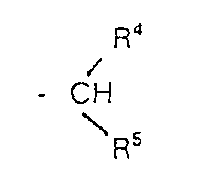 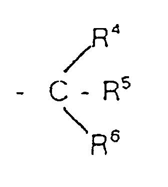 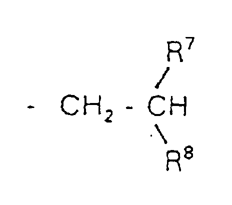 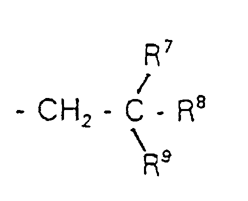
where the radicals
R⁴ to R⁹ are each, independently of one another, a branched or unbranched aliphatic, cycloaliphatic, araliphatic or aromatic hydrocarbon radical having from 1 to 30 carbon atoms, which may be unsubstituted or substituted by hydroxy, alkoxy or halogen groups, and
R¹ and R² can form an unsubstituted or substituted cycloaliphatic ring having up to 8 carbon atoms, where R³ is then a hydrogen atom, and
(B) if desired, 1,2-epoxide compounds which are different from those of (A1) and/or are the unreacted proportions of the compounds (A1) from the preparation of the compounds (A),
(C) hardeners and
(D) if desired, further additives.

2. A composition as claimed in claim 1, wherein the compounds (A1) have epoxide equivalent weights of from 100 to 500 g/mol.

3. A composition as claimed in claim 2, wherein the compounds (A1) are selected from the group (A12) consisting of the diglycidyl ethers of bisphenol A and bisphenol F.

4. A composition as claimed in claim 1, wherein the compounds (A1) are selected from the group (A11) consisting of polyoxyalkylene glycol diglycidyl ethers.

5. A composition as claimed in claim 4, wherein the compounds (A1) are polyoxypropylene glycol diglycidyl ethers.

6. A composition as claimed in claim 1, wherein the amines (A2) are t-alkylamines having from 4 to 22 carbon atoms.

7. A composition as claimed in claim 1, wherein the amines (A2) are t-alkylamines having from 12 to 14 carbon atoms.

8. A composition as claimed in claim 1, wherein the amines (A2) have the formula 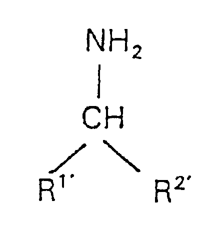 in which R^{1'} and R^{2'} are as defined for R¹ in claim 1 or R^{1'} and R^{2'} can form an unsubstituted or substituted cycloaliphatic ring having up to 8 carbon atoms.

9. A composition as claimed in claim 8, wherein the amine (A2) used is 2-aminobutane.

10. A composition as claimed in claim 8, wherein the amine (A2) used is cyclohexylamine.

11. A composition as claimed in claim 8, wherein the amine (A2) used is 2-ethylhexylamine.

12. A composition as claimed in claim 1, wherein the compounds (A) are reaction products of polyoxypropylene glycol diglycidyl ethers (A1) and 2-aminobutane (A2) and the compounds (B) are selected from the group consisting of the diglycidyl ethers of bisphenol A and bisphenol F.

13. A composition as claimed in claim 1, wherein the hardener (C) used is aminoethylpiperazine.

14. A composition as claimed in claim 1, wherein the hardener used is a mixture of aminoethylpiperazine and nonylphenol and/or benzyl alcohol.

15. A composition as claimed in claim 1, wherein the hardeners (C) are latent hardeners.

16. A composition as claimed in claim 15, wherein the hardener (C) used is dicyandiamide.

17. A composition as claimed in claim 1, wherein the hardeners (C) are polyesters containing carboxyl groups.

18. A composition as claimed in claim 17, wherein the polyesters containing carboxyl groups (C) have an acid number of from 15 to 150 mg KOH/g and a number average molecular weight Mₙ of from 600 to 12000 g/mol.

19. A composition as claimed in claim 1, wherein the hardeners (C) are compounds of the formula III or IV 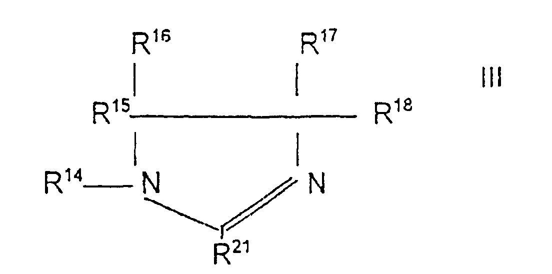 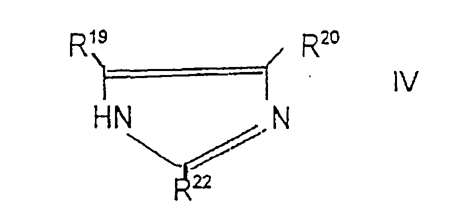 where R¹⁴ to R²⁰ are, independently of one another, hydrogen or an alkyl, aryl, aralkyl, cycloalkyl or heterocyclic radical, R²¹ and R²² are the same as R¹⁴ to R²⁰ or are an alkylene or arylene radical which can be unsubstituted or substituted by one or more alkyl, aryl, aralkyl, cycloalkyl or heterocyclic radicals, and where a plurality of radicals can, if desired, also be bonded via heteroatoms.

20. A composition as claimed in claim 19, wherein the hardener (C) used is 2-phenylimidazoline.

21. Use of the composition as claimed in claim 1 as crack-bridging coating.

22. Use of the composition as claimed in claim 1 as an adhesive, in particular as a single-component adhesive.

23. Use of the composition as claimed in claim 1 for powder surface coating.

## Revendications

1. Compositions de résine époxyde constituées par
(A) des composés qui contiennent au moins deux groupes 1,2-époxyde, qui sont des produits de réactions de
(A1) composés présentant au moins deux groupes 1,2-époxyde, pris parmi des éthers glycidyliques (A12) de phénols multi-fonctionnels ainsi que des novolaques, et des éthers polyglycidyliques (A11) de polyalcools, éventuellement en mélange avec des monoépoxydes, et
(A2) d'une ou plusieurs amines de formule I 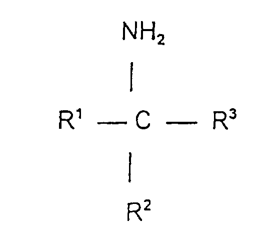
où
R1 représente un reste hydrocarboné ayant 1 à 30 atomes de carbone, aliphatique, cycloaliphatique, araliphatique ou aromatique, linéaire ou ramifié, éventuellement substitué par des substituants hydroxy, alkoxy ou halogène,
R² et R³ représentent chacun, indépendamment l'un de l'autre, un atome d'hydrogène ou un des restes cités à R¹,
à condition que le groupe amino ne soit pas lié directement à un aromatique et pour le cas où R² et R³ représentent des atomes d'hydrogène, le reste R¹ restant représente un des substituants suivants 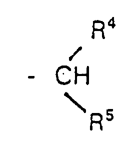 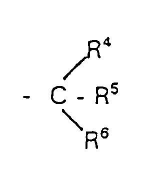 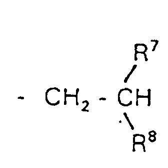 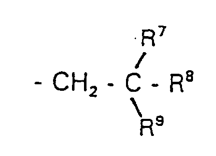
les restes
R⁴ à R⁹ représentant chacun, indépendamment l'un de l'autre, un reste hydrocarboné présentant 1 à 30 atomes de carbone, aliphatique, cycloaliphatique, araliphatique ou aromatique, éventuellement substitué par des substituants hydroxy, alkoxy ou halogène,
R¹ et R² peuvent former un cycle cycloaliphatique présentant jusqu'à 8 atomes de carbone, éventuellement substitué, R³ représentant alors un atome d'hydrogène, et
(B) éventuellement des composés 1,2-époxydes, qui sont différents de ceux selon (A1) et/ou qui sont les portions des composés (A1) n'ayant pas réagi provenant de la préparation des composés (A),
(C) des agents durcisseurs et
(D) éventuellement d'autres additifs.

2. Composition selon la revendication 1, **caractérisée en ce que** les composés (A1) présentent des poids équivalents époxydiques de 100 à 500 g/mole.

3. Composition selon la revendication 2, **caractérisée en ce que** les composés (A1) sont pris dans le groupe (A12) des éthers diglycidyliques du bisphénol A et du bisphénol F.

4. Composition selon la revendication 1, **caractérisée en ce que** les composés (A1) sont pris dans le groupe (A11) des éthers diglycidyliques de polyoxyalkylèneglycols.

5. Composition selon la revendication 4, **caractérisée en ce que** les composés (A1) sont des éthers diglycidyliques de polyoxypropylèneglycols.

6. Composition selon la revendication 1, **caractérisée en ce que** les amines (A2) sont des t-alkylamines présentant 4 à 22 atomes de carbone.

7. Composition selon la revendication 1, **caractérisée en ce que** les amines (A2) sont des t-alkylamines présentant 12 à 14 atomes de carbone.

8. Composition selon la revendication 1, **caractérisée en ce que** les amines (A2) répondent à la formule 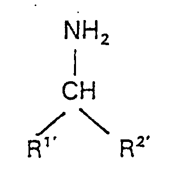 dans laquelle R^{1'} et R^{2'} possèdent la signification de R¹ à la revendication 1 ou R^{1'} et R^{2'} peuvent former un cycle cycloaliphatique ayant jusqu'à 8 atomes de carbone, éventuellement substitué.

9. Composition selon la revendication 8, **caractérisée en ce qu'**on utilise en tant qu'amine (A2) le 2-aminobutane.

10. Composition selon la revendication 8, **caractérisée en ce qu'**on utilise en tant qu'amine (A2) la cyclohexylamine.

11. Composition selon la revendication 8, **caractérisée en ce qu'**on utilise en tant qu'amine (A2) la 2-éthylhexylamine.

12. Composition selon la revendication 1, **caractérisée en ce que** les composés (A) sont pris parmi les produits de réaction d'éthers diglycidyliques de polyoxypropylèneglycol (A1) et de 2-aminobutane (A2) et les composés (B) sont pris dans le groupes des éthers diglycidyliques du bisphénol A et du bisphénol F.

13. Composition selon la revendication 1, **caractérisée en ce qu'**on utilise l'aminoéthylpipérazine en tant qu'agent durcisseur (C).

14. Composition selon la revendication 1, **caractérisée en ce qu'**on utilise en tant qu'agent durcisseur, un mélange d'aminoéthylpipérazine et de nonylphénol et/ou d'alcool benzylique.

15. Composition selon la revendication 1, **caractérisée en ce que** les agents durcisseurs (C) sont des agents durcisseurs latents.

16. Composition selon la revendication 15, **caractérisée en ce qu'**on utilise le dicyanodiamide comme agent durcissuer (C).

17. Composition selon la revendication 1, **caractérisée en ce que** les agents durcisseurs (C) sont des polyesters contenant des groupes carboxyle.

18. Composition selon la revendication 17, **caractérisée en ce que** le polyester contenant des groupes carboxyle (C) présentent un indice d'acide de 15 à 150 mg KOH/g et une masse molaire moyenne en nombre Mₙ de 600 à 12000 g/mole.

19. Composition selon la revendication 1, **caractérisée en ce que** l'agent durcisseur (C) sont des composés de formule III ou IV 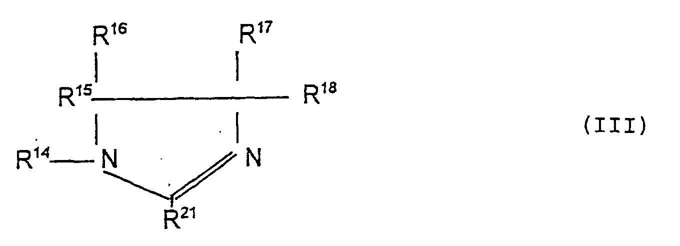 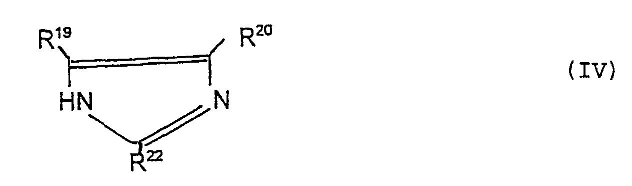 dans lesquels R¹⁴ à R²⁰ représentent, indépendamment les uns des autres, des atomes d'hydrogène ou un reste alkyle, aryle, aralkyle, cycloalkyle ou hétérocyclique, R²¹ et R²² sont identiques à R¹⁴ à R²⁰ ou un reste alkylène ou arylène, qui peut éventuellement être substitué par un ou plusieurs restes alkyle, aryle, aralkyle, cycloalkyle ou hétérocyclique et plusieurs restes pouvant éventuellement être reliés par d'autres hétéroatomes également.

20. Composition selon la revendication 19, **caractérisée en ce qu'**on utilise comme agent durcisseur (C) la 2-phénylimidazoline.

21. Utilisation de la composition selon la revendication 1 en tant que revêtement de connexion en pont ("rißüberbrückend").

22. Utilisation de la composition selon la revendication 1 en tant qu'adhésif, en particulier comme adhésif à un composant.

23. Utilisation de la composition selon la revendication 1 en tant que revêtement de vernis en poudre.
